# EUROPEAN PATENT APPLICATION

(11) **EP 4 804 296 A1**
(43) Date of publication of application: **09.09.2026**
(21) Application number: 24887587.4
(22) Date of filing: 28.08.2024
(51) Int. Cl.: H01M 10/654

(54) **BATTERY CELL, BATTERY AND ELECTRICAL DEVICE**

(30) Priority: 06.11.2023 WO PCT/CN2023/130015; 04.02.2024 CN 202420275601 U
(71) Applicant: Contemporary Amperex Technology Co., Limited, Ningde, Fujian 352100 (CN)
(72) Inventor: ZHUANG, Yongjie, Ningde, Fujian 352100 (CN); ZHENG, Ting, Ningde, Fujian 352100 (CN); LI, Quankun, Ningde, Fujian 352100 (CN); BAI, Lulu, Ningde, Fujian 352100 (CN)
(74) Representative: Ziebig Hengelhaupt Intellectual Property Attorneys Patentanwaltskanzlei PartGmbB
(86) International application number: PCT/CN2024/115244
(87) International publication number: WO 2025/097968

(57) **Abstract**

The present application belongs to the technical field of batteries. Provided are a battery cell, a battery and an electrical device. The battery cell comprises a casing, a cell assembly and an isolation member, the casing being provided with an inner cavity, and the casing comprising a first wall; the cell assembly is arranged in the inner cavity; the isolation member is arranged between the first wall and the cell assembly, and the isolation member separately abuts against the first wall and the cell assembly; the isolation member comprises a metal layer. The present application aims to solve the technical problem of high thermal runaway risk of batteries in the prior art.

## Description

This application claims priority to the International Patent Application PCT/CN2023/130015 filed on November 06, 2023 and entitled "BATTERY CELL, BATTERY, AND ELECTRIC DEVICE", which is incorporated herein by reference in its entirety, and claims priority to the Chinese Patent Application No. 202420275601.2 filed with the China National Intellectual Property Administration on February 04, 2024 and entitled "BATTERY CELL, BATTERY, AND ELECTRIC APPARATUS", which is incorporated herein by reference in its entirety.

### TECHNICAL FIELD

This application belongs to the field of battery technologies, and particularly relates to a battery cell, a battery, and an electric apparatus.

### BACKGROUND

Batteries are widely used in various fields of production and life. During use of a battery, a cell assembly generates heat, and the heat is dissipated from the housing through air, so that the heat dissipation efficiency is low and the heat is not diffused in time, leading to an increase in risk of thermal runaway of the battery.

### SUMMARY

Embodiments of this application are intended to provide a battery and an electric apparatus, aiming to solve the technical problem of high risk of thermal runaway of the battery.

### TECHNICAL SOLUTION

The embodiments of this application adopt the following technical solution.

According to a first aspect, this application provides a battery cell, including:
a housing, having an inner cavity, where the housing includes a first wall;
a cell assembly, disposed in the inner cavity; and
an isolation member, disposed between the first wall and the cell assembly, where the isolation member abuts against both the first wall and the cell assembly, and the isolation member includes a metal layer.

In this example, the isolation member is disposed between the first wall and the cell assembly, and the isolation member is in contact with both the first wall and the cell assembly, so that part of heat generated by the cell assembly can be transferred to the housing through the isolation member and then diffused to the outside, thereby achieving the purpose of heat transfer and heat conduction for the cell assembly. In addition, the isolation member includes a metal layer, where the metal layer has a high thermal conductivity coefficient, which can increase the heat conduction rate for the cell assembly, thereby achieving the purpose of rapid heat conduction for the cell assembly. Furthermore, the metal layer has high resistance to damage, so that the isolation member is less likely to be damaged when the pressure relief mechanism relieves pressure, helping to ensure the service life of the battery.

In an embodiment, the metal layer includes one of aluminum, magnesium, zinc, titanium, nickel, copper, and alloys thereof.

In this example, the materials such as aluminum, magnesium, zinc, titanium, nickel, copper, and alloys thereof have good thermal conductivity, which can increase the heat conduction rate for the cell assembly, thereby achieving the purpose of rapid heat conduction for the cell assembly. These materials also have good ductility and high plastic deformation ability, so that an isolation member made of these materials can resist an impact force generated when the pressure relief mechanism relieves pressure, and are not prone to damage, helping to ensure the service life of the battery. In addition, these materials also have good corrosion resistance, so that when the battery cell contains an electrolyte that is corrosive, an isolation member made of these materials can resist the corrosion of the electrolyte.

In an embodiment, the isolation member has two side surfaces, where the two side surfaces correspondingly face the first wall and the cell assembly respectively, and at least one of the two side surfaces is provided with an oxide layer.

In this example, the oxide layer can improve the insulation performance, damage resistance, and corrosion resistance of the isolation member.

In an embodiment, the battery cell further includes an insulating film wrapping the outside of the cell assembly, where the isolation member abuts against the insulating film, and the isolation member is disposed on a side of the insulating film away from the cell assembly.

In this example, the heat generated by the cell assembly can be transferred to the insulating film. Therefore, when the isolation member is in contact with the cell assembly, the isolation member directly abuts against the insulating film, the isolation member and the insulating film form a contact area, and the isolation member transfers the heat on the insulating film to the housing, thereby achieving the purpose of heat conduction and heat dissipation for the cell assembly and the insulating film.

In an embodiment, the insulating film wraps the cell assembly in a folded manner and forms a first folded edge and a second folded edge overlapping with each other at a side edge of the cell assembly, and a portion of the insulating film located between the cell assembly and the isolation member is provided with a positioning hole. The battery cell further includes an adhesive tape, where the adhesive tape includes a first portion and a second portion connected to each other, the first portion is disposed between the isolation member and the insulating film and covers the positioning hole, and the second portion fixes the first folded edge and the second folded edge.

In this example, the insulating film wraps the outside of the cell assembly and is connected at the side edge through overlapping of the first folded edge and the second folded edge, improving the sealing performance of the insulating film. Then, the first folded edge and the second folded edge are bonded through the adhesive tape, improving the connection firmness of the first folded edge and the second folded edge, and the adhesive tape covers the positioning hole, ensuring the insulation and sealing effects of the insulating film.

In an embodiment, the battery cell further includes a pressure relief mechanism disposed on the first wall, the isolation member is provided with an exhaust channel, and the exhaust channel is in communication with the pressure relief mechanism.

In this example, gas in the exhaust channel can smoothly flow to the pressure relief mechanism, and the pressure relief mechanism can be opened in time to release the gas.

In an embodiment, the exhaust channel is connected to an edge of the isolation member in a first direction, where the first direction intersects with a thickness direction of the first wall.

In this example, the first direction intersects with the thickness direction of the first wall, and the exhaust channel is connected to the edge of the isolation member in the first direction, so that airflow outside the edge of the isolation member in the first direction can enter the exhaust channel to flow toward a position where the pressure relief mechanism is located.

In an embodiment, the housing further includes a second wall, where the second wall is connected to the first wall, a gap is formed between the second wall and an outer circumferential surface of the cell assembly, and the gap is in communication with the exhaust channel.

In this example, by the formation of the gap, a space for airflow to flow can be formed at the outer circumferential surface of the cell assembly, and while the airflow is flowing, the flowing airflow can transfer heat generated at the outer circumferential surface of the cell assembly to the exhaust channel, thereby improving the cooling performance at the outer circumferential surface of the cell assembly and reducing the possibility of local temperature rise at the outer circumferential surface of the cell assembly.

In an embodiment, the isolation member includes a support plate and a plurality of protrusion portions, where the support plate has a first surface, and the plurality of protrusion portions are connected to the first surface and enclose the exhaust channel.

In this example, the plurality of protrusion portions are connected to the first surface to form the exhaust channel, which can make full use of the surface of the support plate to increase a total area of the exhaust channel and increase a flow space for the airflow, thereby helping to improve the fluidity of the airflow.

In an embodiment, the protrusion portions are integrally formed with the support plate.

In this example, the protrusion portions and the support plate are integrally formed, which on one hand can ensure the structural strength of the isolation member, and on the other hand, can ensure the consistency of the outward protruding heights of the protrusion portions and ensure the fitting degree when an outward protruding end surface of the protrusion portion is in contact with the first wall or the cell assembly, thereby ensuring the heat conduction effect.

In an embodiment, the first surface faces the first wall.

In this example, the isolation member is disposed between the first wall and the cell assembly. With the protrusion portion facing the first wall, the support plate can be in contact with the cell assembly for heat conduction, and airflow can also conduct heat to the housing in the exhaust channel, enhancing the heat dissipation effect of the housing, thereby improving the heat dissipation efficiency.

In an embodiment, the support plate has a first edge and a second edge facing away from each other along a first direction; the plurality of protrusion portions include at least a first protrusion portion and a second protrusion portion; the first protrusion portion and the second protrusion portion both extend along the first direction and are located between the first edge and the second edge; the first protrusion portion and the second protrusion portion are spaced apart in a third direction to form the exhaust channel; the third direction is perpendicular to the first direction; and the first direction is a direction perpendicular to a thickness direction of the support plate.

In this example, by the provision of the first protrusion portion and the second protrusion portion, a spacing space between the first protrusion portion and the second protrusion portion forms the exhaust channel, and openings are formed at positions of the first edge and the second edge of the exhaust channel, so that airflow can flow into the exhaust channel from the first edge and the second edge and flow along the exhaust channel toward the position of the pressure relief mechanism, playing a role in guiding the airflow, thereby reducing local airflow accumulation and reducing the problem of excessive local temperature rise.

In an embodiment, the plurality of protrusion portions further include a plurality of third protrusion portions located between the first protrusion portion and the second protrusion portion, where some of the third protrusion portions, together with the first protrusion portion and the second protrusion portion, enclose a plurality of channel inlets at the position of the first edge, and the remaining third protrusion portions, together with the first protrusion portion and the second protrusion portion, enclose a plurality of channel inlets at the position of the second edge.

In this example, by the provision of the plurality of third protrusion portions, the exhaust channel is provided with a plurality of channel inlets at both the first edge and the second edge, to achieve the purpose of shunting the airflow, so that the airflow can enter the exhaust channel from a plurality of directions, improving the airflow aggregation and guiding ability, thereby helping to improve the circulation of the airflow and improve the heat conduction and heat dissipation ability of the isolation member.

In an embodiment, along the first direction, the plurality of third protrusion portions are spaced apart, where the pressure relief mechanism faces spacing regions between the plurality of third protrusion portions.

In this example, by the provision of the plurality of third protrusion portions, the exhaust channel is provided with at least two channel inlets at the first edge as well as at least two channel inlets at the second edge, to achieve the purpose of shunting the airflow, and by the formation of the plurality of channel inlets, the airflow can enter the exhaust channel from a plurality of directions, improving the airflow aggregation and guiding ability, thereby helping to improve the circulation of the airflow and improve the heat conduction and heat dissipation ability of the isolation member.

In an embodiment, the first protrusion portion has a first side edge facing the exhaust channel, where part of the first side edge protrudes outward toward the second protrusion portion to form a first blocking wall, and a surface of the first blocking wall faces the first edge.

In this example, the first blocking wall is formed on the first side edge of the first protrusion portion, and the first blocking wall is configured to block the gas entering the exhaust channel, so that the gas can aggregate at the position of the first blocking wall, and after aggregation, the gas can be concentratively discharged through the pressure relief mechanism, improving the directional pressure relief capability of the battery cell and helping to improve the use performance of the pressure relief mechanism.

In an embodiment, the second protrusion portion has a second side edge facing the exhaust channel, where part of the second side edge protrudes outward toward the first protrusion portion to form a second blocking wall, and a surface of the second blocking wall faces the second edge.

In this example, the second blocking wall is formed on the second side edge of the second protrusion portion, and the second blocking wall is configured to block the gas entering the exhaust channel, so that the gas can aggregate at the position of the second blocking wall, and after aggregation, the gas can be concentratively discharged through the pressure relief mechanism, improving the directional pressure relief capability of the battery cell and helping to improve the use performance of the pressure relief mechanism.

In an embodiment, the surface of the first blocking wall faces the surface of the second blocking wall, and the first blocking wall and the second blocking wall are spaced apart, where the pressure relief mechanism faces a spacing region between the first blocking wall and the second blocking wall.

In this example, the gas accumulates between the first blocking wall and the second blocking wall to communicate with the pressure relief mechanism in a facing manner, so that the pressure relief mechanism can be opened in time for pressure relief, helping to improve the use performance of the pressure relief mechanism.

In an embodiment, the second side edge is provided with a second guiding section inclined from the first edge toward the first side edge along the first direction, where the second guiding section is connected to the second blocking wall, with a flow guide direction being toward the first blocking wall.

In this example, by the provision of the second guiding section, the gas entering the exhaust channel through the first channel inlet can flow toward the first blocking wall under the guiding action of the second guiding section, improving the directivity of the gas flowing toward the first blocking wall, and through the blocking action of the first blocking wall, the gas can aggregate at the position of the first blocking wall, enhancing the gas blocking effect of the first blocking wall.

In an embodiment, the first side edge is provided with a first guiding section inclined from the second edge toward the second side edge along the first direction, where the first guiding section is connected to the first blocking wall, with a flow guide direction being toward the second blocking wall.

In this example, by the provision of the first guiding section, the gas entering the exhaust channel through a second channel inlet can flow toward the second blocking wall under the guiding action of the first guiding section, improving the directivity of the gas flowing toward the second blocking wall, and through the blocking action of the second blocking wall, the gas can aggregate at the position of the second blocking wall, enhancing the gas blocking effect of the second blocking wall.

In an embodiment, an outward protruding height of the protrusion portion is 0.4 mm to 0.8 mm; and/or
a thickness of the support plate is 0.4 mm to 0.8 mm.

In this example, the outward protruding height of the protrusion portion and the thickness of the support plate are appropriately designed, without occupying too much space of the inner cavity, and the outward protruding height of the protrusion portion satisfies the space for fluid to pass through, which ensures the volume of the cell assembly, and thus ensures the energy density of the battery cell.

In an embodiment, the support plate has a second surface facing away from the first surface, where the second surface is provided with a recess.

In this example, the recess forms a groove structure on the second surface, to reduce the overall weight of the support plate by removing a material from the second surface, thereby helping to achieve a light weight of the support plate.

In an embodiment, the recess and the protrusion portion are disposed in one-to-one correspondence in the thickness direction of the support plate.

In this example, the recess can reduce the overall weight of the support plate, helping to achieve a light weight of the support plate; in addition, the recess may alternatively be a stamping groove formed during stamping of the protrusion portion, which achieves integral stamping forming of the support plate and the protrusion portion.

In an embodiment, the first protrusion portion and the second protrusion portion are respectively formed by bending two edges of the support plate that are perpendicular to the first direction.

In this example, the first protrusion portion and the second protrusion portion are both formed through bending, so that the overall isolation member can be integrally formed, achieving higher rigidity and better support stability of the overall isolation member.

In an embodiment, the housing includes a shell and an end cover, where the shell is provided with an accommodating opening, the end cover is connected to the shell and covers the accommodating opening, and the first wall is a wall of the shell or the end cover.

In this example, the end cover is configured to seal the inner cavity of the shell, so that the inner cavity forms a sealed space, the cell assembly is accommodated in the sealed space, and the end cover and the shell can both protect the cell assembly.

According to a second aspect, this application provides a battery including the battery cell in the above embodiments.

According to a third aspect, this application provides an electric apparatus including the battery in the above embodiment, where the battery is configured to provide electrical energy.

The above description is only an overview of the technical solution of this application. To more clearly understand the technical means of this application and to implement it in accordance with the content of the specification, and to make the above and other purposes, features, and advantages of this application more obvious and easier to understand, specific embodiments of this application are illustrated below.

### BRIEF DESCRIPTION OF DRAWINGS

To more clearly illustrate the technical solution of the embodiments of this application, the drawings to be used in the description of the embodiments of this application or the prior art are briefly introduced below. Obviously, the drawings described below are only some embodiments of this application. For those of ordinary skill in the art, other drawings can also be obtained based on these drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a partial view of FIG. 3;
FIG. 5 is a front view of an isolation member in a battery cell according to some embodiments of this application;
FIG. 6 is a cross-sectional view along A-A in FIG. 5;
FIG. 7 is a first isometric view of FIG. 5;
FIG. 8 is a second isometric view of FIG. 5;
FIG. 9 is a schematic structural diagram of another isolation member in a battery cell according to some embodiments of this application;
FIG. 10 is a front view of still another isolation member in a battery cell according to some embodiments of this application;
FIG. 11 is a top view of FIG. 10;
FIG. 12 is a schematic structural exploded view of a battery cell according to some other embodiments of this application;
FIG. 13 is a schematic diagram of a flow direction of airflow in a battery cell according to some embodiments of this application;
FIG. 14 is a cross-sectional view of a battery cell according to an embodiment of this application along a first direction;
FIG. 15 is a schematic structural exploded view of a battery cell according to still some other embodiments of this application;
FIG. 16 is a front view of an isolation member in a battery cell according to yet some other embodiments of this application;
FIG. 17 is a cross-sectional view along B-B in FIG. 16;
FIG. 18 is a first isometric view of FIG. 16;
FIG. 19 is a second isometric view of FIG. 16;
FIG. 20 is a schematic diagram of a flow direction of airflow in a battery cell according to some other embodiments of this application;
FIG. 21 is a first schematic structural exploded view of a battery cell according to still some other embodiments of this application;
FIG. 22 is a second schematic structural exploded view of a battery cell according to yet some other embodiments of this application;
FIG. 23 is a third schematic structural exploded view of a battery cell according to further some other embodiments of this application;
FIG. 24 is a front view of an isolation member in a battery cell according to still further some other embodiments of this application;
FIG. 25 is a schematic diagram of a flow direction of airflow on an isolation member in a battery cell according to yet further some other embodiments of this application;
FIG. 26 is a rear view of FIG. 24;
FIG. 27 is a cross-sectional view along C-C in FIG. 26;
FIG. 28 is a partial enlarged view of position D in FIG. 27;
FIG. 29 is an isometric view of FIG. 26;
FIG. 30 is a schematic diagram of a flow direction of airflow in a battery cell according to some other embodiments of this application;
FIG. 31 is a first schematic diagram of an external structure of an insulating film in a battery cell according to some embodiments of this application; and
FIG. 32 is a second schematic diagram of an external structure of an insulating film in a battery cell according to some embodiments of this application.

Description of reference signs in drawings:
1000. vehicle; 100. battery; 10. box; 11. first component; 12. second component; 20. battery cell; 21. housing; 211. shell; 2111. inner cavity; 2112. accommodating opening; 212. end cover; 213. first wall; 214. second wall; 22. cell assembly; 221. bare cell; 222. insulating film; 2221. first folded edge; 2222. second folded edge; 2223. positioning hole; 23. isolation member; 231. support plate; 2311. first surface; 2312. second surface; 232. protrusion portion; 2321. first protrusion portion; 23211. first side edge; 23212. first blocking wall; 23213. first guiding section; 2322. second protrusion portion; 23221. second side edge; 23222. second blocking wall; 23223. second guiding section; 2323. third protrusion portion; 233. exhaust channel; 2331. fluid aggregation region; 234. first edge; 235. second edge; 236. first channel inlet; 237. second channel inlet; 238. recess; 24. adhesive tape; 241. first portion; 242. second portion; 25. pressure relief mechanism; 26. gap; 261. first gap; 262. second gap; X. first direction; Y. third direction; Z. second direction; L1. thickness of support plate; and L2. outward protruding height.

### DESCRIPTION OF EMBODIMENTS

The embodiments of the technical solution of this application are described in detail below with reference to the accompanying drawings. The following embodiments are only used to illustrate the technical solution of this application more clearly, and thus are only used as examples and cannot be used to limit the protection scope of this application.

Unless otherwise defined, all technical and scientific terms used herein have the same meaning as commonly understood by those skilled in the technical field to which this application belongs; the terms used herein are only for the purpose of describing specific embodiments and are not intended to limit this application; and the terms "include", "comprise", "have", and any variations thereof in the specification and claims of this application and the above description of the drawings are intended to cover non-exclusive inclusion.

In the description of the embodiments of this application, the technical terms "first", "second", and the like are only used to distinguish different objects, and cannot be understood as indicating or implying relative importance or implicitly indicating the number, specific order or primary and secondary relationship of the indicated technical features. In the description of the embodiments of this application, "a plurality of" means two or more, unless otherwise clearly and specifically limited.

The mention of "an embodiment" herein means that specific features, structures or characteristics described in combination with this embodiment can be included in at least one embodiment of this application. The appearance of the phrase at various positions in the specification does not necessarily refer to the same embodiment, nor is it an independent or alternative embodiment that is mutually exclusive with other embodiments. Those skilled in the art clearly and implicitly understand that the embodiments described herein can be combined with other embodiments.

In the description of the embodiments of this application, the term "and/or" is merely an association relationship describing associated objects, indicating that three relationships may exist, for example, A and/or B may indicate the following three cases: only A exists, both A and B exist, and only B exists. In addition, the character "/" herein generally indicates that the contextually associated objects are in an "or" relationship.

In the description of the embodiments of this application, the term "a plurality of" means more than two (including two). Similarly, "a plurality of groups" means more than two groups (including two groups), and "a plurality of pieces" means more than two pieces (including two pieces).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like is based on the orientation or positional relationship shown in the drawings, and is only for facilitating the description of the embodiments of this application and simplifying the description, rather than indicating or implying that the referred apparatus or element must have a specific orientation or be constructed and operated in a specific orientation, and therefore cannot be understood as a limitation on the embodiments of this application.

In the description of the embodiments of this application, unless otherwise clearly specified and limited, the technical terms "mounting", "connection", "join", "fastening", and the like should be understood in a broad sense, for example, it may be a fixed connection, a detachable connection, or an integral body; it may be a mechanical connection or an electrical connection; it may be a direct connection or an indirect connection through an intermediate medium; and it may be an internal communication between two elements or an interaction relationship between two elements. For those of ordinary skill in the art, the specific meanings of the above terms in the embodiments of this application can be understood according to specific situations.

Thermal management of batteries has become an important factor restricting the safety performance of batteries. In recent years, increasingly high requirements are imposed on the performance of batteries, and high-power fast charging, large-capacity batteries, and complex working conditions make it possible for thermal runaway to occur during the use of batteries.

Usually, thermal runaway first occurs on one battery cell. During long-cycling and high-rate operation of the battery cell, a cell assembly has different degrees of temperature rise. The temperature rise causes electrolyte decomposition to produce gas, increases side reactions in the system, and increases the internal resistance of the cell assembly, thereby accelerating the decay of the cell assembly and triggering the risk of thermal runaway.

Usually, part of the heat generated during the operation of the cell assembly is dissipated through connection of the cell assembly with an explosion-proof top cover, and the other part of heat is exchanged between the housing and the cell assembly. In related art, the cell assembly and the housing exchange heat through air, the heat exchange efficiency is low, and there is still much room for improvement in the heat dissipation capability of the cell assembly.

Therefore, to achieve the purpose of rapid heat dissipation of the cell assembly, an isolation member capable of conducting heat is additionally provided between the cell assembly and the housing. The isolation member is installed between the cell assembly and the housing. When the isolation member is installed between the bottom of the cell assembly and the housing, the isolation member can also play a role in supporting and bearing the cell assembly. The isolation member can directly transfer the heat of the cell assembly to the housing and can achieve rapid heat transfer. Therefore, the heat conduction performance of the isolation member is crucial.

When the isolation member is made of a plastic material, the thermal conductivity coefficient is generally 0.2 w/mk to 0.5 w/mk, and the low thermal conductivity coefficient results in low heat conduction ability, causing insufficient suppression on temperature rise inside the cell assembly, which is not conducive to achieving the purpose of rapid heat dissipation of the cell assembly. In addition, the melting point of plastic material is low, so that melting occurs during a pressure relief process of the battery cell, and the melted isolation member accumulates at the pressure relief mechanism, blocking the pressure relief hole, causing poor exhaust, and thus resulting in an extremely high possibility of triggering thermal runaway of the battery cell.

Therefore, using materials with a high thermal conductivity coefficient to make an isolation member with a high thermal conductivity greatly improves the heat dissipation capability of a lower part of the cell assembly, thereby effectively dissipating the heat generated during the operation of the cell assembly, reducing the temperature rise inside the cell assembly, prolonging the cycle life of the cell assembly, and reducing the risk of thermal runaway.

In view of the above factors, according to a first aspect, an embodiment of this application provides a battery cell, which can improve the heat conduction performance between a cell assembly and a housing and improve the heat dissipation capability of the cell assembly. It should be noted that the battery cell disclosed in this embodiment of this application can be used in electric apparatuses using batteries as power sources or various energy storage systems using batteries as energy storage elements. The electric apparatus may be, but is not limited to, mobile phones, tablets, notebook computers, electric toys, electric tools, battery cars, electric vehicles, ships, and spacecraft, where the electric toys may include fixed or mobile electric toys, such as game consoles, electric toy cars, electric toy ships, and electric toy airplanes; and spacecraft may include airplanes, rockets, space shuttles, spaceships, and the like.

For ease of description, an example in which an electric apparatus is a vehicle 1000 according to an embodiment of this application is used for description in the following embodiments.

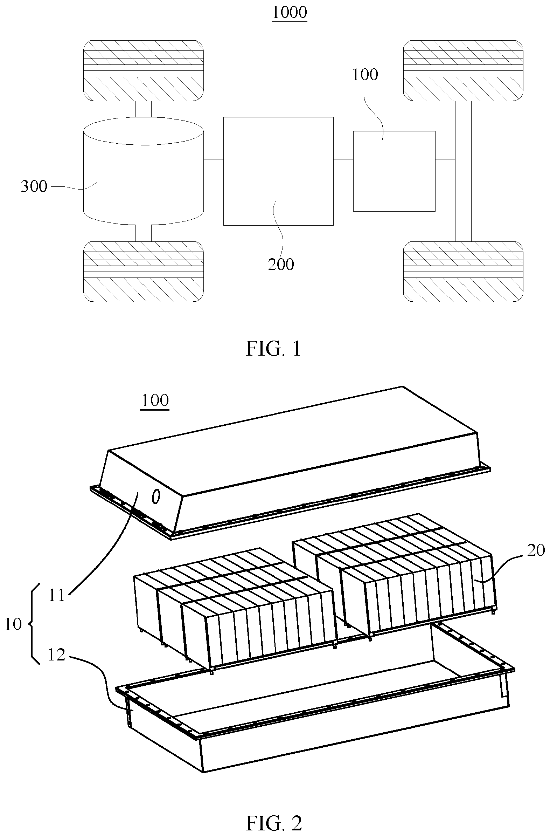

Reference is made to FIG. 1, where FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid vehicle, a range-extended vehicle, or the like. A battery 100 is provided inside the vehicle 1000, where the battery 100 may be provided at the bottom, front, or rear of the vehicle 1000. The battery 100 may be used for power supply of the vehicle 1000. For example, the battery 100 may serve as an operating power source of the vehicle 1000. The vehicle 1000 may further include a controller 200 and a motor 300, where the controller 200 is configured to control the battery 100 to supply power to the motor 300, for example, for the starting, navigation, and driving power needs of the vehicle 1000.

In some embodiments of this application, the battery 100 can serve as not only an operating power source of the vehicle 1000 but also a driving power source of the vehicle 1000, replacing or partially replacing fuel or natural gas to provide driving power for the vehicle 1000.

Reference is made to FIG. 2, where FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20, and the box 10 may adopt various structures. In some embodiments, the box 10 may include a first component 11 and a second component 12, where the first component 11 and the second component 12 cover each other, so that the first component 11 and the second component 12 jointly define an accommodating space for accommodating the battery cell 20. The second component 12 may be a hollow structure with one end open, the first component 11 may be a plate-like structure, and the first component 11 covers the open side of the second component 12, enabling the first component 11 and the second component 12 to jointly define the accommodating space. The first component 11 and the second component 12 may alternatively each be a hollow structure with one side open, and the open side of the first component 11 covers the open side of the second component 12. Certainly, the box 10 formed by the first component 11 and the second component 12 may be in various shapes, such as a cylindrical shape and a cuboidal shape.

In the battery 100, a plurality of battery cells 20 may be provided, where the plurality of battery cells 20 may be connected in series, in parallel, or in series-parallel, where the series-parallel connection refers to a combination of a series connection and a parallel connection between the plurality of battery cells 20. The plurality of battery cells 20 may be directly connected in series, in parallel, or in series-parallel, and then an entirety formed by the plurality of battery cells 20 is accommodated in the box 10. Certainly, the battery 100 may alternatively be formed in a way that a plurality of battery cells 20 are first connected in series, in parallel, or in series-parallel to form battery modules, and then a plurality of battery modules are connected in series, in parallel, or in series-parallel to form an entirety that is accommodated in the box 10. The battery 100 may further include other structures. For example, the battery 100 may further include a busbar component for achieving electrical connection between the plurality of battery cells 20.

The battery cell 20 refers to the smallest unit constituting a battery. Each battery cell 20 may be a secondary battery or a primary battery, and it can alternatively be a lithium-sulfur battery, a sodium-ion battery, or a magnesium-ion battery, but is not limited thereto. The battery cell 20 may be in a cylindrical shape, a flat shape, a cuboidal shape, or other shapes.

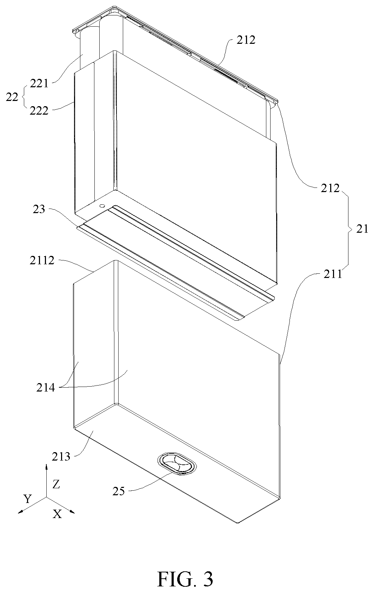

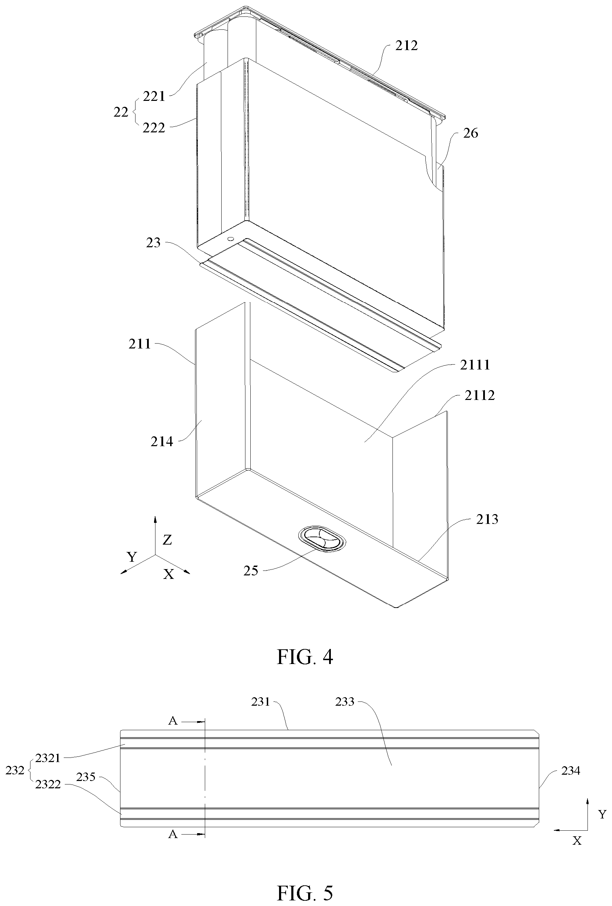

According to some embodiments of this application, reference is made to FIG. 3, where FIG. 3 is a schematic structural exploded view of a battery cell 20 according to some embodiments of this application. In addition, reference is also made to FIG. 4, where FIG. 4 is a partial view of FIG. 3, to show an inner cavity 2111 and a gap 26. These embodiments of this application provide a battery cell 20. The battery cell 20 includes a housing 21, a cell assembly 22, and an isolation member 23. The housing 21 has an inner cavity 2111, and the housing 21 has a first wall 213. The cell assembly 22 is disposed in the inner cavity 2111. The isolation member 23 is disposed between the first wall 213 and the cell assembly 22. The isolation member 23 abuts against both the first wall 213 and the cell assembly 22. The isolation member 23 includes a metal layer.

The housing 21 forms an external housing structure of the battery cell 20, and the housing 21 is at least partially hollow to form the inner cavity 2111. The housing 21 has a first wall 213, where the first wall 213 is one of wall surfaces of the housing 21, and the first wall 213 may be at least one of a bottom wall, a top wall, or a side wall of the housing 21. The housing 21 may be an aluminum shell or made of other materials.

The cell assembly 22 is a component in the battery cell 20 where electrochemical reactions take place, and the housing 21 may include one or more cell assemblies 22. The cell assembly 22 is installed in the inner cavity 2111. The cell assembly 22 may be a wound structure or a stacked structure. The cell assembly 22 may be placed into the inner cavity 2111 of the housing 21 through an opening on the housing 21. The cell assembly 22 has a contact surface in contact with the isolation member 23, where the contact surface may be a bottom surface, a top surface, or any side surface of the cell assembly 22.

The isolation member 23 is installed in the inner cavity 2111 and located between the cell assembly 22 and the first wall 213. The isolation member 23 abuts against both the first wall 213 and the cell assembly 22. An abutting manner includes direct abutting or indirect abutting, where direct abutting means that a surface of the isolation member 23 is in direct contact with the first wall 213 (or in direct contact with the cell assembly 22), and indirect abutting includes that the isolation member 23 may be in contact with the first wall 213 (or the cell assembly 22) through an intermediate component, that is, the isolation member 23 is in direct contact with the intermediate component, and the intermediate component is in direct contact with the first wall 213 (or the cell assembly 22). In addition, an abutting range includes full abutting and partial abutting, where full abutting means that an entire abutting surface of the isolation member 23 completely fits with the first wall 213 (or a contact surface of the cell assembly 22), and partial abutting means that part of an abutting surface of the isolation member 23 or part of a region on the abutting surface fits with the first wall 213 (or the contact surface of the cell assembly 22). Therefore, it can be understood that the isolation member 23 abutting against both the first wall 213 and the cell assembly 22 means that the isolation member 23 needs to have a region in contact with both the first wall 213 and the cell assembly 22, adopting various flexible contact manners between the isolation member 23 and the first wall 213 and the cell assembly 22.

Disposing the isolation member 23 between the first wall 213 and the cell assembly 22 can further prevent direct contact between the cell assembly 22 and the housing 21, thereby reducing the risk of short circuit.

The isolation member 23 may be a plate-like structure, a frame structure, or the like. The isolation member 23 may be provided with a first surface 2311 in contact with the first wall 213 of the housing 21 and a second surface 2312 in contact with the cell assembly 22, where the first surface 2311 and the second surface 2312 may face away from each other or disposed with an included angle; a length dimension of the first surface 2311 may be equal to or less than a length dimension of the first wall 213, and a width dimension of the first surface 2311 may be equal to or less than a width dimension of the first wall 213, so that the first surface 2311 can be in full contact with the first wall 213. Similarly, a length dimension of the second surface 2312 may be equal to or less than a length dimension of a contact surface of the cell assembly 22, and a width dimension of the second surface 2312 may be equal to or less than a width dimension of the contact surface of the cell assembly 22, so that the second surface can be in full contact with the contact surface of the cell assembly 22.

The isolation member 23 includes a metal layer. It can be understood that the metal layer is made of a metal material. The isolation member 23 may include only a metal layer; and the isolation member 23, upon the presence of the metal layer, may further include a non-metal layer made of other non-metal materials, where the metal layer and the non-metal layer may be prepared by lamination pressing. Under the condition that the isolation member includes only the metal layer, it can be learned that the metal layer forms the isolation member.

The metal layer is made of a metal material, where the metal material has a high thermal conductivity coefficient. The metal material includes materials such as black metal, non-ferrous metal, and special metal. In addition, the metal material may further include alloy materials. Specifically, the metal material may include aluminum, iron, magnesium, titanium, copper, zinc, lead, silver, gold, platinum, nickel, alloy materials, and the like, where the alloy materials include carbon steel, stainless steel, copper-nickel alloy, iron-nickel alloy, and the like.

In addition to high heat transfer performance, the metal layer also has the advantage of high melting point, making the isolation member 23 have high strength and damage resistance. The battery cell 20 is usually provided with a pressure relief mechanism 25, where the pressure relief mechanism 25 may be an explosion-proof valve. When gas is produced inside the battery 100, the pressure relief mechanism 25 can, through its pressure control apparatus, control a pressure of the gas inside the battery 100 to keep the pressure within a safe range, so as to prevent accidents such as explosion and fire of the battery 100 due to excessive swelling. When gas with an excessively high pressure is produced inside the battery 100, the pressure relief mechanism 25 is opened to release the internal pressure, to achieve the purpose of protecting the battery 100.

The metal layer has a high melting point, which may be greater than 250 degrees Celsius. Therefore, the metal layer can form a heat-resistant portion of the isolation member 23, and the melting point of the heat-resistant portion may be 251 degrees Celsius, 260 degrees Celsius, 270 degrees Celsius, 304.4 degrees Celsius, 327 degrees Celsius, 340 degrees Celsius, 488 degrees Celsius, 500 degrees Celsius, 600 degrees Celsius, 700 degrees Celsius, 1083.4 degrees Celsius, 1534.8 degrees Celsius, or the like. The high melting point of the metal layer can make the battery cell 20 less likely to have the problem of melting-caused accumulation during pressure relief, and make a pressure relief position less likely to be blocked and affect pressure relief of the pressure relief mechanism 25.

Under a condition that the isolation member 23 is installed close to the pressure relief mechanism 25, when the pressure relief mechanism 25 is opened for pressure relief, an impact pressure generated by the pressure relief acts on the isolation member 23. Under a condition that the isolation member 23 is made of a metal material, the isolation member 23 has higher hardness and strength, so that the isolation member 23 has enhanced damage resistance and thus is less likely to be damaged upon receiving an impact. The isolation member 23 also has a high melting point, making the isolation member 23 less likely to have melting phenomenon during pressure relief and making a pressure relief hole less likely to be blocked so as not to trigger thermal runaway. Compared with an isolation member 23 made of a plastic material that is prone to melting and damage by impact, the isolation member 23 made of a metal material in this application is less likely to be damaged, which helps to prolong the service life of the battery 100.

In a possible implementation, during assembly of the battery cell 20, the cell assembly 22 is independently prepared, and the isolation member 23 is installed in the inner cavity 2111 of the housing 21, so that the isolation member 23 abuts against the first wall 213 of the housing 21; then, the cell assembly 22 is placed in the inner cavity 2111, so that the cell assembly 22 abuts against the isolation member 23.

In this example of this application, the isolation member 23 is disposed between the first wall 213 and the cell assembly 22, and the isolation member 23 can be in contact with both the first wall 213 and the cell assembly 22, so that part of heat generated by the cell assembly 22 can be transferred to the housing 21 through the isolation member 23 and then diffused to the outside, achieving the purpose of heat transfer and heat conduction for the cell assembly 22, thereby helping to reduce the risk of thermal runaway of the battery cell 20. In addition, the isolation member 23 includes at least an isolation member made of a metal material, where the metal material has a high thermal conductivity coefficient, so that the isolation member 23 can increase the heat conduction rate for the cell assembly 22 to achieve the purpose of rapid heat conduction for the cell assembly 22. Furthermore, the metal material has a high melting point and high damage resistance, so that when the pressure relief mechanism 25 relieves pressure, the isolation member 23 is less likely to be damaged, helping to ensure the service life of the battery 100.

In some examples, the metal layer includes one of aluminum, magnesium, zinc, titanium, nickel, copper, and alloys thereof, that is, the metal layer or the isolation member is made of one material of aluminum, magnesium, zinc, titanium, nickel, copper, and alloys thereof. The alloy refers to aluminum alloy, magnesium alloy, zinc alloy, titanium alloy, nickel alloy, or copper alloy.

For example, the metal layer is made of an aluminum material, where the aluminum material has a high thermal conductivity coefficient of 237 W/(m·K). The isolation member 23 can increase the heat conduction rate from the cell assembly 22 to the housing 21, achieving the purpose of rapid heat conduction between the cell assembly 22 and the housing 21. In addition, aluminum is a light metal with a light weight, which can reduce the weight of the battery 100, thereby helping to achieve a light weight of the battery cell 20.

The aluminum material also has good ductility and high plastic deformation ability, making the isolation member 23 capable of resisting an impact force generated when the pressure relief mechanism 25 relieves pressure, and making the isolation member 23 less likely to be damaged, thereby helping to ensure the service life of the battery 100.

In addition, the aluminum material also has good corrosion resistance, so that when the battery cell 20 contains an electrolyte that is corrosive, the isolation member 23 can resist the corrosion of the electrolyte.

The formation of the alloy can change the physical, chemical, and mechanical properties of the metal layer. Through alloying, characteristics such as hardness, strength, corrosion resistance, thermal stability, and electrical conductivity of the metal layer can be improved. In addition, the alloy can also adjust properties such as melting point, swelling coefficient, and magnetism of the metal layer, making the isolation member 23 better adapt to the high temperature and corrosive environment inside the battery cell 20.

In this example, the materials such as aluminum, magnesium, zinc, titanium, nickel, copper, and alloys thereof have good thermal conductivity, which can increase the heat conduction rate for the cell assembly 22 to achieve the purpose of rapid heat conduction for the cell assembly 22. These materials also have good ductility and high plastic deformation ability, so that an isolation member 23 made of these materials can resist an impact force generated when the pressure relief mechanism 25 relieves pressure, and is less likely to be damaged, helping to ensure the service life of the battery. In addition, these materials also have good corrosion resistance, so that when the battery cell 20 contains an electrolyte that is corrosive, an isolation member 23 made of these materials can resist the corrosion of the electrolyte.

In some examples, the isolation member 23 has two side surfaces, where the two side surfaces correspondingly face the first wall 213 and the cell assembly 22 respectively, and at least one of the two side surfaces is provided with an oxide layer. The oxide layer may also be construed as an oxide film. The oxide layer includes aluminum oxide, magnesium oxide, zinc oxide, titanium oxide, nickel oxide, or copper oxide. An alloy oxide is a compound formed by a reaction of a metal element in the alloy with oxygen. It can be understood that the oxide layer is specifically one of an aluminum oxide layer, a magnesium oxide layer, a zinc oxide layer, a titanium oxide layer, a nickel oxide layer, a copper oxide layer, and an alloy oxide layer. The composition of the oxide layer is determined based on the material of the metal layer.

The oxide layer is formed through oxidation treatment. Specifically, for metal materials, the oxidation treatment mainly includes anodic oxidation treatment. In an anodic oxidation treatment process, the isolation member 23 serves as an anode, and undergoes an oxidation reaction through electrolysis in an electrolyte solution containing an appropriate electrolyte, to form a dense oxide layer on a surface of the isolation member 23. This oxide layer is usually referred to as an anodic oxide layer or anodic oxide film.

When the isolation member 23 is a plate-like structure, the isolation member 23 has two side surfaces facing away from each other and in parallel, where one side surface faces the cell assembly 22, and an oxide layer may be independently formed on this side surface; and the other side surface faces the first wall 213, and an oxide layer may also be independently formed on this side surface. Certainly, oxide layer may also be formed on both the side surfaces to increase an area of the oxide layer. Alternatively, the entire surface of the isolation member 23 may be oxidized to form an oxide layer on the surface of the isolation member 23, to simplify the oxidation process.

In this example, the oxidation treatment on the isolation member 23 can improve the insulation performance of the isolation member 23, so that the risk of short circuit is less likely to occur between the isolation member 23 and the cell assembly 22 and between the isolation member 23 and the housing 21. In addition, after the oxide layer is formed through oxidation treatment, the surface hardness of the isolation member 23 can also be improved, improving the damage resistance of the isolation member 23. Furthermore, the oxide layer can also improve the corrosion resistance of the isolation member 23. For example, upon electrolyte leakage, a protective layer is formed on the surface of the isolation member 23, making the isolation member 23 less likely to be corroded.

In some examples, the battery cell 20 further includes an insulating film 222 wrapping the outside of the cell assembly 22, the isolation member 23 abuts against the insulating film 222, and the isolation member 23 is disposed on a side of the insulating film 222 away from the cell assembly 22.

The insulating film 222 is also referred to as a Mylar film, where the Mylar film is a component in an aluminum-shell cell. The Mylar film wraps the outside of the cell assembly 22 to prevent a separator of the bare cell 221 from being scratched by the aluminum shell while the bare cell 221 is put into the shell, and also has the function of preventing direct contact between a jelly roll and the aluminum shell to achieve insulation protection.

The insulating film 222 wraps the outside of the cell assembly 22 to protect the outside of the cell assembly 22. It can be understood that the heat generated by the cell assembly 22 can be transferred to the Mylar film. Therefore, when the isolation member 23 is in contact with the cell assembly 22, the isolation member 23 directly abuts against the Mylar film, the isolation member 23 and the Mylar film form a contact area, and a heat conduction portion absorbs the heat on the Mylar film and then transfers the heat to the housing 21, thereby achieving the purpose of heat conduction and heat dissipation for the cell assembly 22 and the Mylar film.

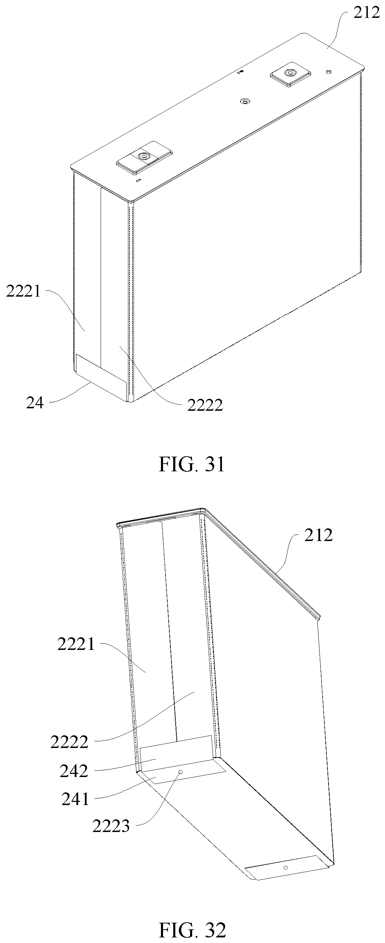

In some examples, with reference to FIG. 31 and FIG. 32, the insulating film 222 wraps the cell assembly 22 in a folded manner and forms a first folded edge 2221 and a second folded edge 2222 overlapping with each other at a side edge of the cell assembly 22, where a portion of the insulating film 222 located between the cell assembly 22 and the isolation member 23 is provided with a positioning hole 2223. The battery cell 20 further includes an adhesive tape 24, where the adhesive tape 24 includes a first portion 241 and a second portion 242 connected to each other, the first portion 241 is disposed between the isolation member 23 and the insulating film 222 and covers the positioning hole 2223, and the second portion 242 fixes the first folded edge 2221 and the second folded edge 2222.

The insulating film 222 is disposed outside the cell assembly 22 in a wrapping manner to achieve insulation between the cell assembly 22 and the housing 21 and between the cell assembly 22 and the isolation member 23 respectively, reducing the risk of short circuit. The first folded edge 2221 and the second folded edge 2222 are at the connected positions of the insulating film 222, and the first folded edge 2221 and the second folded edge 2222 are connected in an overlapping manner to reduce a gap at the connection positions, making the insulating film 222 more tightly closed. The positioning hole 2223 can play a positioning role during assembly of the cell assembly 22 and the isolation member 23, improving the accuracy of an installation position of the isolation member 23 relative to the cell assembly 22.

The adhesive tape 24 is connected to an outer surface of the insulating film 222 through adhesion. The second portion 242 of the adhesive tape 24 is mainly configured to adhere and fix the positions of the first folded edge 2221 and the second folded edge 2222, and the first portion 241 of the adhesive tape 24 can cover the positioning hole 2223, reducing the risk of air leakage and electrolyte leakage of the insulating film 222, thereby ensuring the insulation and sealing effects of the insulating film 222.

In this example, the insulating film 222 wraps the outside of the cell assembly 22 and is connected at the side edge through overlapping of the first folded edge 2221 and the second folded edge 2222, improving the sealing performance of the insulating film 222; the adhesion of the first folded edge 2221 and the second folded edge 2222 through the adhesive tape 24 improves the connection firmness of the first folded edge 2221 and the second folded edge 2222; and the adhesive tape 24 covers the positioning hole 2223 to ensure the insulation and sealing effects of the insulating film 222.

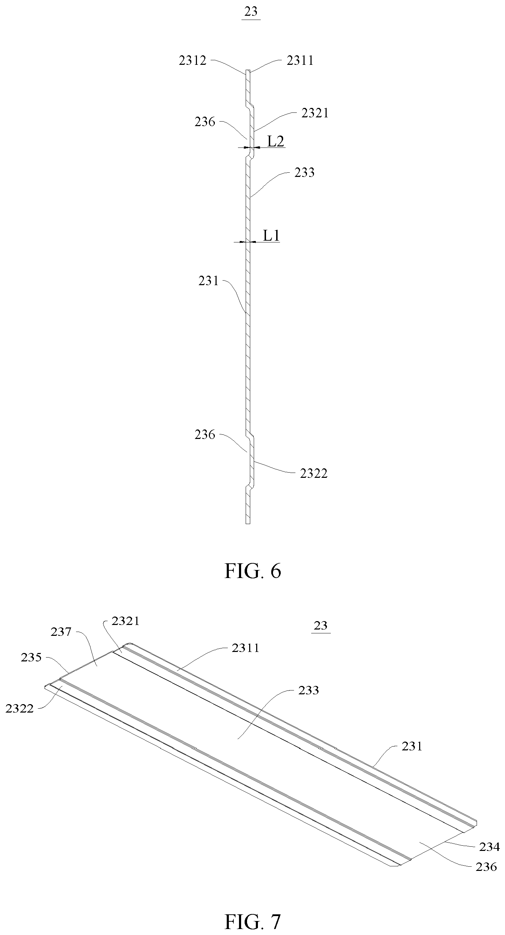

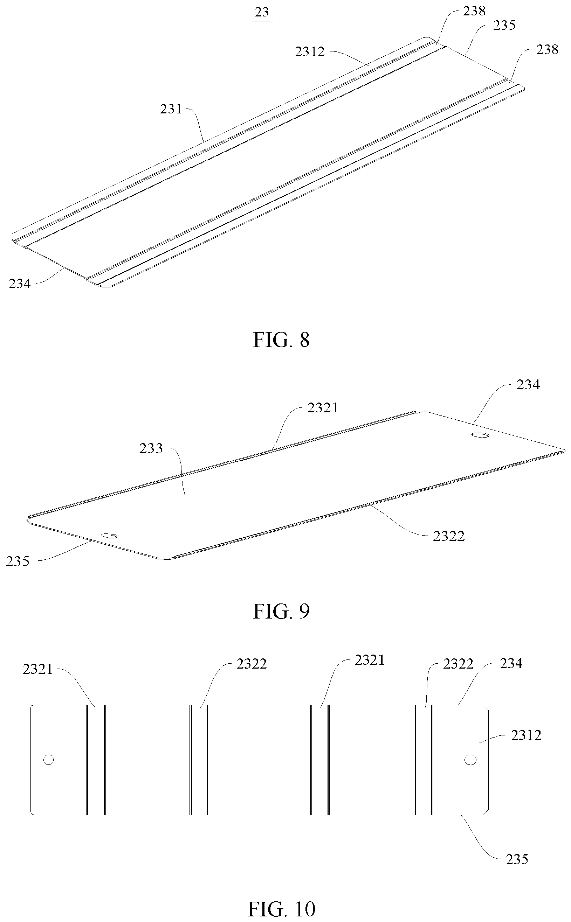

In some examples, with reference to FIG. 5 to FIG. 8, FIG. 5 is a front view of an isolation member 23 in a battery cell 20 according to some embodiments of this application; FIG. 6 is a cross-sectional view along A-A at position A in FIG. 5; FIG. 7 and FIG. 8 respectively show isometric views of FIG. 5; and FIG. 8 is a schematic structural diagram of a rear view direction of FIG. 7. In these embodiments of this application, the battery cell 20 further includes a pressure relief mechanism 25 disposed on the first wall 213, the isolation member 23 is provided with an exhaust channel 233, and the exhaust channel 233 is in communication with the pressure relief mechanism 25.

The exhaust channel 233 is configured to allow airflow in the inner cavity 2111 of the housing 21 to flow on the isolation member 23. Since the isolation member 23 is disposed between the cell assembly 22 and the first wall 213, the exhaust channel 233 can make the airflow flow between the cell assembly 22 and the first wall 213. The exhaust channel 233 can make the airflow flow toward the position of the pressure relief mechanism 25. For example, the pressure relief mechanism 25 is connected to or integrally formed with the first wall 213. In a thickness direction of the first wall 213, the pressure relief mechanism 25 is located within a projection surface of the exhaust channel 233, the exhaust channel 233 can make the airflow flow from the cell assembly 22 to the pressure relief mechanism 25, and the airflow carries heat generated by the cell assembly 22 and directionally moves the heat to the pressure relief mechanism 25.

Therefore, the battery cell 20 can isolate the first wall 213 from the cell assembly 22 through the isolation member 23, so that the cell assembly 22 does not directly abut against the first wall 213 and the pressure relief mechanism 25. In addition, due to the provision of the exhaust channel 233 on the isolation member 23, a channel for airflow to flow toward the pressure relief mechanism 25 can be formed, thereby making the airflow easier to flow toward the pressure relief mechanism 25, thereby improving the directional fluidity of the gas inside the battery cell 20. The pressure relief mechanism 25 can be opened in time to release the gas, improving the use performance of the pressure relief mechanism 25.

The first wall 213 in this example may be any wall surface of the housing 21. For example, the first wall 213 may be a top wall, a bottom wall, or any side wall of the housing 21. With reference to FIG. 3 and FIG. 4, the first wall 213 is the bottom wall, and the pressure relief mechanism 25 is installed on the bottom wall of the housing 21, thereby achieving the purpose of releasing gas from the bottom of the battery cell 20. The pressure relief mechanism 25 is disposed on the first wall 213, and the isolation member 23 is disposed between the first wall 213 and the cell assembly 22. On one hand, the isolation member 23 isolates the cell assembly 22 from the housing 21, reducing the possibility of contact between the cell assembly 22 and the housing 21, and making the cell assembly 22 no longer abut against the pressure relief mechanism 25, thereby enhancing the pressure relief effect of the pressure relief mechanism 25. On the other hand, the isolation member 23 supports the cell assembly 22 at the bottom of the cell assembly 22, reducing deformation of the housing 21 caused by extrusion of the cell assembly 22. Moreover, the isolation member 23 is provided with the exhaust channel 233, so that the heat generated by the cell assembly 22 can directionally flow to the position of the pressure relief mechanism 25 on the first wall 213 in the form of fluid along the exhaust channel 233, and then the pressure relief mechanism 25 performs pressure relief control on the airflow, so as to enhance the pressure relief effect of the pressure relief mechanism 25 when the risk of thermal runaway occurs in the battery cell 20.

The pressure relief mechanism 25 may be an explosion-proof valve, a pressure relief valve, or the like. The pressure relief mechanism 25 is an installation apparatus for explosion protection of the battery 100, depending on an operating principle that the risk of explosion of the battery cell 20 is reduced by monitoring an internal pressure change of the battery cell 20 and opening the pressure relief mechanism 25 to release the pressure when the pressure rises to a specific level.

Under a normal use condition, the pressure inside the battery cell 20 is low, and the pressure relief mechanism 25 remains closed, without causing gas leakage. When the battery cell 20 experiences abnormal conditions such as overcharging, over-discharging, and internal short circuit, a large amount of gas is produced inside the battery cell 20, causing a sharp pressure rise. A load switch or metal diaphragm is installed inside the pressure relief mechanism 25. When the pressure inside the battery cell 20 rises to a specific level, the switch is closed or the metal diaphragm is stressed to deform. When the switch is closed or the metal diaphragm deforms, the pressure relief mechanism 25 is opened to allow the gas produced inside the battery cell 20 to be released rapidly, thereby reducing the pressure inside the battery cell 20. By releasing the gas, the pressure inside the battery cell 20 is restored to be within a normal range, and the pressure relief mechanism 25 is closed. The pressure relief mechanism 25 can effectively reduce the risk of explosion caused by an excessively high pressure in the battery cell 20.

Therefore, it can be learned that the pressure relief mechanism 25 is mainly configured to release gas, and the exhaust channel 233 is configured to make the airflow (or gas) flow to a position facing the pressure relief mechanism 25. Therefore, it can be understood that the gas released in the battery cell 20 flows through the exhaust channel 233 toward a position where the pressure relief mechanism 25 is located, and aggregates at the position of the pressure relief mechanism 25; and when the pressure reaches a preset pressure, the pressure relief mechanism 25 is opened to rapidly release the gas in the battery cell 20, to reduce the problem of explosion of the battery cell 20 caused by thermal runaway.

In this example, the gas carrying the heat generated by the cell assembly 22 enters the exhaust channel 233, and is guided through the exhaust channel 233 to flow to the position where the pressure relief mechanism 25 is located. By installing the pressure relief mechanism 25 on the first wall 213 of the housing 21, the exhaust channel 233 is in communication with the pressure relief mechanism 25, so that the gas in the exhaust channel 233 can flow toward the pressure relief mechanism 25, and the pressure relief mechanism 25 can be opened to release the gas, ensuring that the pressure in the battery cell 20 is maintained within an appropriate range, thereby helping to enhance the gas flow guide effect and also to improve the use performance of the pressure relief mechanism 25.

In some examples, the exhaust channel 233 is a channel provided at the surface of the isolation member 23 for airflow to flow. In some examples, the exhaust channel 233 is a channel running through the interior of the isolation member 23, and an end portion of the channel is connected to the surface of the isolation member 23. In some examples, the exhaust channel 233 partially runs through the interior of the isolation member 23 and is partially provided at the surface of the isolation member 23.

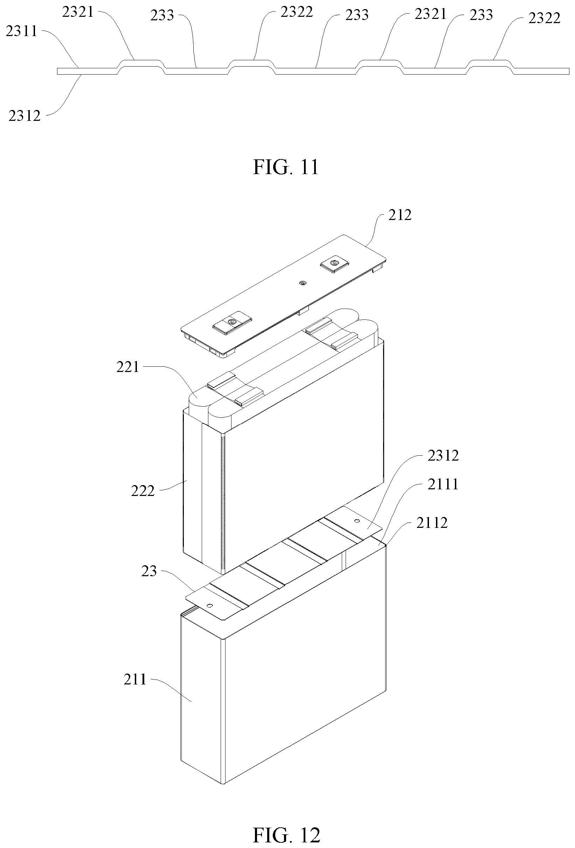

In these examples, there may be one exhaust channel 233 or a plurality of exhaust channels 233. With reference to FIG. 10 and FIG. 11, when the isolation member 23 has a plurality of exhaust channels 233, the plurality of exhaust channels 233 may be disposed independent of each other, and the plurality of exhaust channels 233 may be in communication with each other.

In these examples of this application, the isolation member 23 is disposed in the inner cavity 2111, the isolation member 23 is installed between the cell assembly 22 and the first wall 213 of the housing 21, and the exhaust channel 233 of the isolation member 23 serves as a passage for airflow to flow, so that the blocking of the airflow by the isolation member 23 disposed between the first wall 213 and the cell assembly 22 can be reduced, enabling the airflow to flow, through the exhaust channel 233, toward the position where the pressure relief mechanism 25 is located, thereby improving the reliability of the battery cell 20.

In some examples, with reference to FIG. 3 to FIG. 5 and FIG. 7, the exhaust channel 233 is connected to an edge of the isolation member 23 in a first direction X, where the first direction X intersects with a thickness direction of the first wall 213.

In these examples, the thickness direction of the first wall 213 may be a second direction Z as shown in FIG. 4. In these examples, the first direction X intersects with the thickness direction of the first wall 213, meaning that the first direction X is not parallel to the thickness direction of the first wall 213. Optionally, the first direction X may be perpendicular to the thickness direction of the first wall 213, so that when the first wall 213 is the bottom wall, the second direction Z may be construed as a height direction of the housing 21.

The edge of the isolation member 23 in the first direction X may be any edge of the isolation member 23 in the first direction X. In some examples, the isolation member 23 is a rectangular plate, the isolation member 23 has a length direction and a width direction, and the edge of the isolation member 23 in the first direction X may refer to at least one edge of the isolation member 23 in the length direction or the width direction.

Reference is made to FIG. 7, where the exhaust channel 233 is connected to the edge of the isolation member 23 in the first direction X, meaning that the exhaust channel 233 has at least two openings, and the two openings may be construed as the following first channel inlet 236 and second channel inlet 237.

In these examples, the first direction X intersects with the thickness direction of the first wall 213, and by connecting the exhaust channel 233 to the edge of the isolation member 23 in the first direction X, the airflow outside the edge of the isolation member 23 in the first direction X can flow along the exhaust channel 233 toward the position where the pressure relief mechanism 25 is located, thereby reducing the problem of local temperature rise at the edge position of the isolation member 23 in the first direction X due to blocking of the airflow.

In some examples, with reference to FIG. 5 to FIG. 8, the housing 21 further includes a second wall 214, where the second wall 214 is connected to the first wall 213, a gap 26 is formed between the second wall 214 and an outer circumferential surface of the cell assembly 22, and the gap 26 is in communication with the exhaust channel 233.

In these examples, the second wall 214 may be any wall surface of the housing 21 other than the first wall 213. In an example in which the first wall 213 is a bottom wall of the housing 21, the second wall 214 may be a side wall or top wall of the housing 21. In some embodiments, the second wall 214 may be a wall directly connected to the first wall 213, for example, the second wall 214 is a side wall of the housing 21, or the second wall 214 is a part of a side wall of the housing 21.

In these examples, the outer circumferential surface of the cell assembly 22 refers to a surface of the cell assembly 22 facing the second wall 214. A gap 26 is formed between the outer circumferential surface of the cell assembly 22 and the second wall 214 to facilitate airflow circulation. The exhaust channel 233 is in communication with the gap 26, meaning that at least one opening of the exhaust channel 233 (specifically a channel inlet) is in communication with the gap 26, and the airflow in the gap 26 can flow along the exhaust channel 233 toward the position where the pressure relief mechanism 25 is located. The opening may be construed as including the first channel inlet 236 and the second channel inlet 237, where both the first channel inlet 236 and the second channel inlet 237 are in communication with the gap 26.

In these examples, on one hand, by the formation of the gap 26, a space for airflow to flow can be formed at the outer circumferential surface of the cell assembly 22, and while airflow is flowing, the flowing airflow can transfer heat generated at the outer circumferential surface of the cell assembly 22 to the exhaust channel 233, thereby improving the cooling performance at the outer circumferential surface of the cell assembly 22 and reducing the possibility of local temperature rise at the outer circumferential surface of the cell assembly 22. On the other hand, as the airflow flows from the gap 26 toward the exhaust channel 233, the temperature of the second wall 214 close to the outer circumferential surface of the cell assembly 22 can be reduced through the flowing of the airflow, thereby reducing the possibility of deformation of the second wall 214 close to the outer circumferential portion of the cell assembly 22.

In these examples, one exhaust channel 233 may be in communication with the gap 26. In some examples, the exhaust channel 233 on the isolation member 23 can form a plurality of exhaust sub-channels, where each exhaust sub-channel can form a channel inlet in communication with the gap 26, so that the gap 26 can be in communication with a plurality of sub-gaps 26.

In some examples, with reference to FIG. 5 to FIG. 13, FIG. 13 is a schematic diagram of a flow direction of airflow in a battery cell 20 according to some embodiments of the application, where an edge of the isolation member 23 in a first direction X includes a first edge 234 and a second edge 235, and the gap 26 is in communication with the exhaust channel 233 at both the first edge 234 and the second edge 235.

With reference to FIG. 4, FIG. 13, and FIG. 14, FIG. 14 is a cross-sectional view of a battery cell 20 along a first direction X according to an embodiment of this application, where the first edge 234 and the second edge 235 are two edges of the isolation member 23 in the first direction X. Therefore, it can be learned that the first edge 234 and the second edge 235 may be two corresponding open ends of the isolation member 23 in a length or width direction, and the two open ends respectively form a first channel inlet 236 and a second channel inlet 237 in communication with the gap 26, where the gap 26 is in communication with the exhaust channel 233 through both the first channel inlet 236 and the second channel inlet 237.

It can be understood that the exhaust channel 233 has a first channel inlet 236 and a second channel inlet 237, where the first channel inlet 236 and the second channel inlet 237 are respectively disposed at two ends of the exhaust channel 233 along the first direction X; and the first channel inlet 236 and the second channel inlet 237 are both in communication with the exhaust channel 233.

The first channel inlet 236 and the second channel inlet 237 are different inlets for fluid to enter the exhaust channel 233, so that the airflow can enter the exhaust channel 233 from a plurality of positions and a plurality of directions, thereby improving the flow guide capability of the exhaust channel 233.

The first channel inlet 236 and the second channel inlet 237 may be disposed in a plurality of directions of the isolation member 23. However, when the first channel inlet 236 and the second channel inlet 237 are respectively disposed at two ends of the exhaust channel 233 along the first direction X, it can be learned that the exhaust channel 233 can at least guide flow of a fluid in two opposite directions. For example, when the isolation member 23 (specifically the support plate 231 described below) has a first edge 234 and a second edge 235, the first channel inlet 236 and the second channel inlet 237 may be respectively disposed at two ends of the isolation member 23 (specifically the support plate 231 described below) in the first direction X; to be specific, the first channel inlet 236 is disposed at the first edge 234 of the isolation member 23 (specifically the support plate 231 described below), and the second channel inlet 237 is disposed at the second edge 235 of the isolation member 23 (specifically the support plate 231 described below). A fluid inputted through the first channel inlet 236 and a fluid inputted through the second channel inlet 237 can flow toward each other to a middle region of the exhaust channel 233, where the middle region may be construed as a position facing the pressure relief mechanism 25. The middle region forms a fluid aggregation region 2331 for aggregating the fluid, so that the pressure relief mechanism 25 can be disposed on the first wall 213 facing the fluid aggregation region 2331.

In these examples, by the provision of the first channel inlet 236 and the second channel inlet 237 facing each other along the first direction X on the isolation member 23, the fluid entering the exhaust channel 233 through the first channel inlet 236 and the fluid entering the exhaust channel 233 through the second channel inlet 237 can move toward each other and aggregate at a position where the fluids meet, so that the fluids can flow toward the position where the pressure relief mechanism 25 is located through aggregation, improving the flow guide capability of the isolation member 23 and helping to improve the use performance of the pressure relief mechanism 25.

In some examples, a plurality of first channel inlets 236 are provided, where inlet orientations of the plurality of first channel inlets 236 may be the same or different.

The provision of the plurality of first channel inlets 236 increases paths for gas to flow into the exhaust channel 233, and the plurality of first channel inlets 236 may be in communication with different regions in the gap 26, increasing communication positions between the gap 26 and the exhaust channel 233, thereby helping to enhance the flow guide effect of the exhaust channel 233 and improve the flow guide efficiency.

Similarly, in some examples, a plurality of second channel inlets 237 are provided, where inlet orientations of the plurality of second channel inlets 237 may be the same or different.

The provision of the plurality of second channel inlets 237 increases paths for gas to flow into the exhaust channel 233, and the plurality of second channel inlets 237 may be in communication with different regions in the gap 26, increasing communication positions between the gap 26 and the exhaust channel 233, thereby helping to enhance the flow guide effect of the exhaust channel 233 and improve the flow guide efficiency.

Optionally, in some examples, a plurality of first channel inlets 236 and a plurality of second channel inlets 237 may be provided respectively, where the plurality of first channel inlets 236 and the plurality of second channel inlets 237 may be in communication with different regions in the gap 26, increasing paths for gas to flow into the exhaust channel 233, and increasing communication positions between the gap 26 and the exhaust channel 233, thereby helping to enhance the flow guide effect of the exhaust channel 233 and improve the flow guide efficiency.

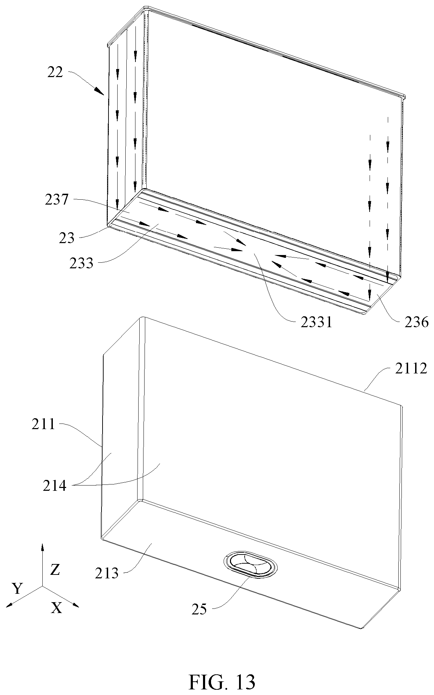

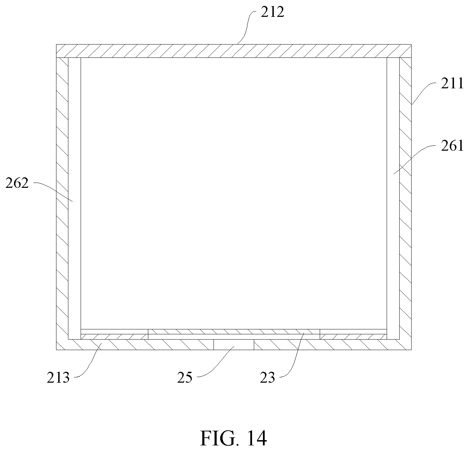

In some examples, with reference to FIG. 13 and FIG. 14, the gap 26 includes a first gap 261 and a second gap 262, where the first gap 261 is in communication with the exhaust channel 233 through the first edge 234, and the second gap 262 is in communication with the exhaust channel 233 through the second edge 235, that is, the first edge 234 forms the first channel inlet 236 in communication with the exhaust channel 233, the second edge 235 forms the second channel inlet 237 in communication with the exhaust channel 233, the first gap 261 is in communication with the exhaust channel 233 through the first channel inlet 236, and the second gap 262 is in communication with the exhaust channel through the second channel inlet 237.

The second wall 214 may include two second sub-walls, where the first gap 261 is formed between one second sub-wall and a surface of the cell assembly 22, the second gap 262 may be formed between the other second sub-wall and the surface of the cell assembly 22, and the first gap 261 and the second gap 262 jointly form the gap 26.

The two second sub-walls may be two side walls of the housing 21 that face each other. For example, the cell assembly 22 is in a columnar shape, and the cell assembly 22 has two groups of side walls facing away from each other. Correspondingly, the housing 21 is also in a columnar shape, and the housing 21 has two groups of inner walls facing each other, where one group of inner walls facing each other are the two second sub-walls. After the cell assembly 22 is accommodated in the inner cavity 2111 of the housing 21, one second sub-wall forms the first gap 261 with one side wall of the cell assembly 22, and the other second sub-wall forms the second gap 262 with one side wall of the cell assembly 22. The first gap 261 may be in communication with the second gap 262 or not.

The first gap 261 is in communication with the first channel inlet 236, so that the gas in the first gap 261 can enter the exhaust channel 233 through the first channel inlet 236, and the second gap 262 is in communication with the second channel inlet 237, so that the gas in the second gap 262 can enter the exhaust channel 233 through the second channel inlet 237.

In these examples, the gas produced by the cell assembly 22 can enter both the first gap 261 and the second gap 262, where the first gap 261 and the second gap 262 are located outside part of the surface of the cell assembly 22, and after the first gap 261 and the second gap 262 are both in communication with an airflow channel, the airflow flows directionally in the first gap 261 and the second gap 262, which also plays a flow guiding role for the airflow.

In some examples, with reference to FIG. 7, the isolation member 23 includes a support plate 231 and a plurality of protrusion portions 232, where the support plate 231 has a first surface 2311, and the plurality of protrusion portions 232 are connected to the first surface 2311 and enclose the exhaust channel 233.

The support plate 231 is a main structure of the isolation member 23 and installed between the cell assembly 22 and the first wall 213; the first surface 2311 is one surface of the support plate 231 in a thickness direction (second direction Z); and the support plate 231 may be a flat plate-like structural member.

The plurality of protrusion portions 232 are connected to the first surface 2311 to form the exhaust channel 233, which can make full use of the surface of the support plate 231 to increase a total area of the exhaust channel 233 and increase the flow space for the airflow, thereby helping to improve the fluidity of the airflow.

The plurality of protrusion portions 232 are connected to the first surface 2311 of the isolation member 23 and spaced part at preset positions on the first surface 2311, so that a spacing space is formed between two adjacent protrusion portions 232, and a plurality of spacing spaces are in communication with each other to form the exhaust channel 233.

The shape of the protrusion portion 232 may be selected according to specific circumstances, and the protrusion portion 232 may be in a cuboidal shape, a cylindrical shape, a ring shape, or a combination of a plurality of shapes. Outward protruding heights L2 of the protrusion portions 232 may be the same or different, where the outward protruding height L2 of the protrusion portion 232 is a thickness of the protrusion portion 232, and an outward protruding end surface of the protrusion portion 232 is a contact surface. When the protrusion portion 232 is located on a side of the support plate facing the cell assembly 22, the outward protruding end surface of the protrusion portion 232 is in contact with the cell assembly 22, and when the protrusion portion 232 is located on a side of the support plate 231 facing the first wall 213, the outward protruding end surface of the protrusion portion 232 is in contact with the first wall 213. It should be noted that when the protrusion portion 232 is located on the side of the support plate 231 facing the cell assembly 22, the exhaust channel 233 is also formed on the side of the support plate 231 facing the cell assembly 22, and a hole structure enabling communication between the exhaust channel 233 and the first wall 213 needs to be provided at the support plate 231, so that the airflow can flow toward the first wall 213 through the exhaust channel 233.

The protrusion portion 232 plays a supporting role between the cell assembly 22 and the first wall 213, so that the airflow can flow toward the position where the pressure relief mechanism 25 is located through the spacing spaces between the protrusion portions 232. One or more exhaust channels 233 can be formed between the plurality of protrusion portions 232, or the plurality of protrusion portions 232 may be spaced apart and misaligned to form a plurality of interconnected and staggered exhaust channels 233.

The plurality of protrusion portions 232 may form a plurality of support positions on the first surface 2311 to disperse an acting force received by the support plate 231, thereby reducing deformation of the support plate 231 due to stress concentration and reducing the possibility of deformation of the support plate 231. The plurality of protrusion portions 232 may be disposed on the first surface 2311 in a regular arrangement manner, where the regular arrangement means that the plurality of protrusion portions 232 are regularly distributed along a preset direction, to form a regular exhaust channel 233 on the first surface 2311.

In some examples, with reference to FIG. 6, a thickness L1 of the support plate 231 is 0.4 mm to 0.8 mm.

The support plate 231 may be a flat plate-like structure, and the support plate 231 is configured to form the protrusion portion 232 through stamping. Therefore, a thickness of the protrusion portion 232 should not be too large so as not to affect the stamping effect. In addition, a larger thickness of the support plate 231 results in occupation of larger space in the inner cavity 2111, which accordingly reduces the volume of the cell assembly 22, thereby easily causing a decrease in energy density of the battery cell 20. However, the support plate 231 needs to play a supporting and bearing effect between the cell assembly 22 and the first wall 213. To improve the deformation resistance of the support plate 231, the thickness L1 of the support plate 231 should not be too small. Therefore, the thickness L1 of the support plate 231 may be 0.5 mm, 0.6 mm, 0.7 mm, 0.8 mm, or the like. Certainly, the thickness L1 of the support plate 231 may alternatively be any other value in the above range.

In some examples, with reference to FIG. 6, an outward protruding height L2 of the protrusion portion 232 is 0.4 mm to 0.8 mm.

When the support plate 231 is in a flat plate-like shape, the heights of the protrusion portions 232 may be the same, so that the outward protruding end surfaces of the protrusion portions 232 may be located on a same plane, and thus the outward protruding end surfaces of the protrusion portions 232 can fit with the first wall 213. The outward protruding height L2 of the protrusion portion 232 may be 0.5 mm, 0.6 mm, 0.7 mm, 0.8 mm, or the like.

A larger outward protruding height L2 of the protrusion portion 232 enables larger space of the exhaust channel 233, but a larger height of the support plate 231 results in occupation of larger space in the inner cavity 2111, which accordingly reduces the volume of the cell assembly 22, thereby causing a decrease in energy density of the battery cell 20. Therefore, the outward protruding height L2 of the protrusion portion 232 may be 0.5 mm, 0.6 mm, 0.7 mm, 0.8 mm, or the like. Certainly, the outward protruding height L2 of the protrusion portion 232 may alternatively be any other value in the above range.

In some examples, the protrusion portions 232 are integrally formed with the support plate 231.

The protrusion portion 232 is connected to the first surface 2311 of the support plate 231 and integrally formed with the support plate 231. For example, the isolation member 23 is a stamped component, where stamping is performed on the support plate 231 to form the protrusion portion 232 that protrudes from the surface of the support plate 231.

In a preparation process of the isolation member 23, an integral stamping forming method may be used to ensure the structural strength. The plurality of protrusion portions 232 are formed by one-time stamping to ensure that the outward protruding heights L2 of the protrusion portions 232 are the same and to ensure that the outward protruding end surfaces of the protrusion portions 232 can fit with the first wall 213 or the surface of the cell assembly 22, thereby reducing the formation of gaps, ensuring a heat conduction area, and enhancing the heat conduction effect.

In some examples, with reference to FIG. 3, FIG. 4, FIG. 7 and FIG. 8, the first surface 2311 is configured to face the first wall 213.

The support plate 231 has a first surface 2311 facing the first wall 213, where the protrusion portion 232 protrudes outward in a direction from the first surface 2311 toward the first wall 213.

The support plate 231 is in a flat plate-like shape. Along a thickness direction of the support plate 231, the support plate 231 has a first surface 2311 and a second surface 2312 facing away from the first surface 2311. The first surface 2311 faces the first wall 213, and the second surface 2312 faces the cell assembly 22. The second surface 2312 may be in contact with the cell assembly 22, to enable the support plate 231 to directly absorb the heat on the cell assembly 22.

The protrusion portion 232 is formed on the first surface 2311, and the protrusion portion 232 is formed by the first surface 2311 protruding outward by a preset height, that is, the protrusion portion 232 protrudes outward toward the first wall 213, so that the outward protruding end surface of the protrusion portion 232 is in contact with the first wall 213.

The exhaust channel 233 is formed on a surface of the support plate 231 facing the first wall 213. The first wall 213 of the housing 21 abuts against the outward protruding end surface of the protrusion portion 232. Therefore, it can be learned that during circulation of the airflow in the exhaust channel 233, part of the heat can also be directly transferred to the housing 21, which increases paths for heat dissipation through the housing 21, thereby helping to improve the heat dissipation efficiency and reducing the risk of thermal runaway.

In these examples, the isolation member 23 is disposed between the first wall 213 and the cell assembly 22, and the protrusion portion 232 faces the first wall 213, so that the support plate 231 can be in contact with the cell assembly 22 for heat conduction, and the airflow can conduct heat to the housing 21 in the exhaust channel 233, enhancing the heat dissipation effect of the housing 21, thereby improving the heat dissipation efficiency.

In some examples, with reference to FIG. 5, FIG. 7 and FIG. 8, the support plate 231 has a first edge 234 and a second edge 235 facing away from each other along the first direction X. The plurality of protrusion portions 232 include at least a first protrusion portion 2321 and a second protrusion portion 2322, where the first protrusion portion 2321 and the second protrusion portion 2322 both extend along the first direction X and are located between the first edge 234 and the second edge 235, and the first protrusion portion 2321 and the second protrusion portion 2322 are spaced apart in a third direction Y to form the exhaust channel 233. The third direction Y is perpendicular to the first direction X; and the first direction X is a direction perpendicular to the thickness direction of the support plate 231.

With reference to FIG. 7, the second direction Z is the thickness direction of the support plate 231, the first direction X may be a direction perpendicular to the thickness direction of the support plate 231, the third direction Y is also a direction perpendicular to the thickness direction of the support plate 231, and the first direction X is perpendicular to the third direction Y. For example, when the support plate 231 is a rectangular plate, the first direction X is a length direction of the support plate 231, the third direction Y is a width direction of the support plate 231, and the second direction Z is a height direction of the housing 21. The edge may be an edge of the support plate 231 in the length direction or the width direction, and the first edge 234 and the second edge 235 may be two edges of the support plate 231 that face each other in the length direction or two edges of the support plate 231 that face each other in the width direction.

The plurality of protrusion portions 232 include at least one first protrusion portion 2321 and one second protrusion portion 2322, where the first protrusion portion 2321 and the second protrusion portion 2322 are located between the first edge 234 and the second edge 235; the third direction Y is a direction perpendicular to extension directions of the first protrusion portion 2321 and the second protrusion portion 2322; and in the third direction Y, a spacing space is formed between the first protrusion portion 2321 and the second protrusion portion 2322, and the spacing space forms the exhaust channel 233.

The exhaust channel 233 may be linear or curved between the first edge 234 and the second edge 235, where the curve includes arc curve, bent curve, or the like. The exhaust channel 233 may be formed in a regular shape or in an irregular shape.

For example, when the support plate 231 is a rectangular plate, with reference to FIG. 5, the first edge 234 and the second edge 235 are respectively two edges of the support plate 231 that face each other in the length direction; the first protrusion portion 2321 and the second protrusion portion 2322 may both extend along the length direction of the support plate 231 and form rectangular protruding end surfaces; and two ends of each of the first protrusion portion 2321 and the second protrusion portion 2322 both extend to the first edge 234 and the second edge 235. The first protrusion portion 2321 and the second protrusion portion 2322 may be formed through stamping or bending. With reference to FIG. 9, the first protrusion portion 2321 and the second protrusion portion 2322 are respectively formed by bending two edges of the support plate 231 that are perpendicular to the first direction X. The two edges along the first direction X may be in the width direction, and the two edges face each other in the first direction. The overall isolation member 23 can be integrally formed through bending, achieving higher rigidity and better support stability of the overall isolation member 23.

On the surface of the support plate 231, a spacing space is formed between the first protrusion portion 2321 and the second protrusion portion 2322, and the spacing space is the exhaust channel 233. Therefore, it can be understood that at least one opening of the exhaust channel 233 is connected to the first edge 234, and at least one opening of the exhaust channel 233 is in communication with the second edge 235. The opening located at the first edge 234 and the opening located at the second edge 235 may each be an inlet of the exhaust channel 233, that is, the first channel inlet 236 and the second channel inlet 237. Thus, the pressure relief mechanism 25 located on the first wall 213 may be disposed in any region facing the spacing space between the first protrusion portion 2321 and the second protrusion portion 2322. For example, the pressure relief mechanism 25 is disposed in a middle region of the exhaust channel 233 in the first direction X.

For another example, when the support plate 231 is a rectangular plate, with reference to FIG. 10 to FIG. 12, the first edge 234 and the second edge 235 are respectively edges at two ends along the width direction, and the first protrusion portion 2321 and the second protrusion portion 2322 may both extend along the width direction of the support plate 231 and form rectangular protruding end surfaces. The first protrusion portion 2321 and the second protrusion portion 2322 are grouped, and a plurality of groups of first protrusion portions 2321 and second protrusion portions 2322 spaced apart in the third direction Y can be formed on the surface of the support plate 231. One exhaust channel 233 is formed between the first protrusion portion 2321 and the second protrusion portion 2322 in each group, so that a plurality of exhaust channels 233 can be formed on the surface of the support plate 231, where the plurality of exhaust channels 233 are spaced apart, and each exhaust channel 233 is provided with a first channel inlet 236 and a second channel inlet 237. The provision of the plurality of exhaust channels 233 can improve the flow guide capability, thereby helping to improve the flow guide efficiency.

In this example, by the provision of the first protrusion portion 2321 and the second protrusion portion 2322, the exhaust channel 233 is formed in the spacing space between the first protrusion portion 2321 and the second protrusion portion 2322, so that the airflow can flow into the exhaust channel 233 from an inlet formed between an extension end of the first protrusion portion 2321 and an extension end of the second protrusion portion 2322, and flow along the exhaust channel 233 toward the position where the pressure relief mechanism 25 is located, thereby guiding the airflow, reducing local airflow accumulation, and reducing the problem of excessive local temperature rise.

In some examples, with reference to FIG. 5, the first protrusion portion 2321 and the second protrusion portion 2322 both extend from the first edge 234 to the second edge 235 along the first direction X. It can be learned that the exhaust channel 233 runs through from the first edge 234 to the second edge 235, and the exhaust channel 233 is provided with inlets respectively at the positions of the first edge 234 and the second edge 235, where the inlets may be construed as the following first channel inlet 236 and second channel inlet 237.

In these examples, the exhaust channel 233 is provided with the inlets at the positions of the first edge 234 and the second edge 235, so that the airflow can flow into the exhaust channel 233 from the first edge 234 and the second edge 235, and flow along the exhaust channel 233 toward the position where the pressure relief mechanism 25 is located, thereby guiding the airflow, reducing local airflow accumulation, and reducing the problem of excessive local temperature rise.

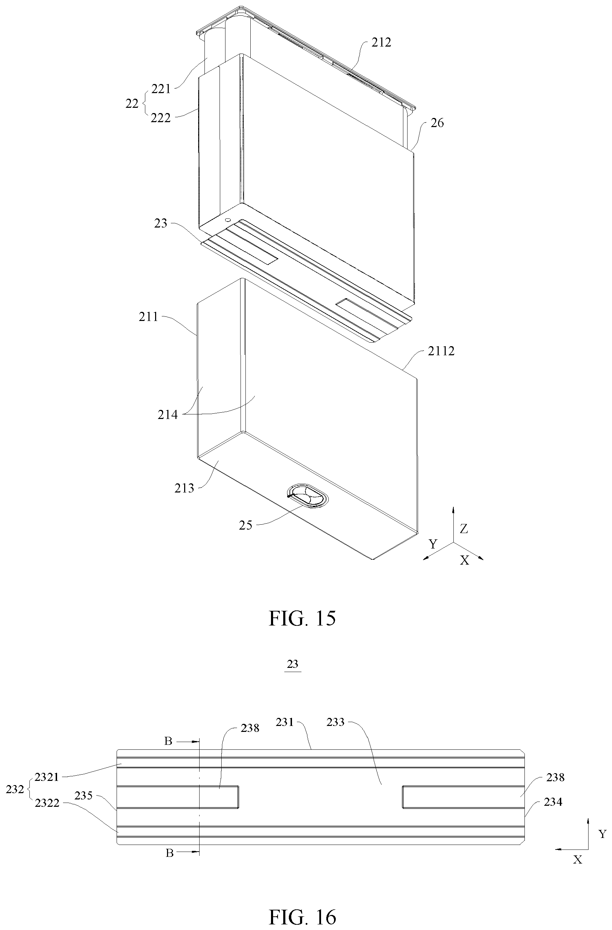

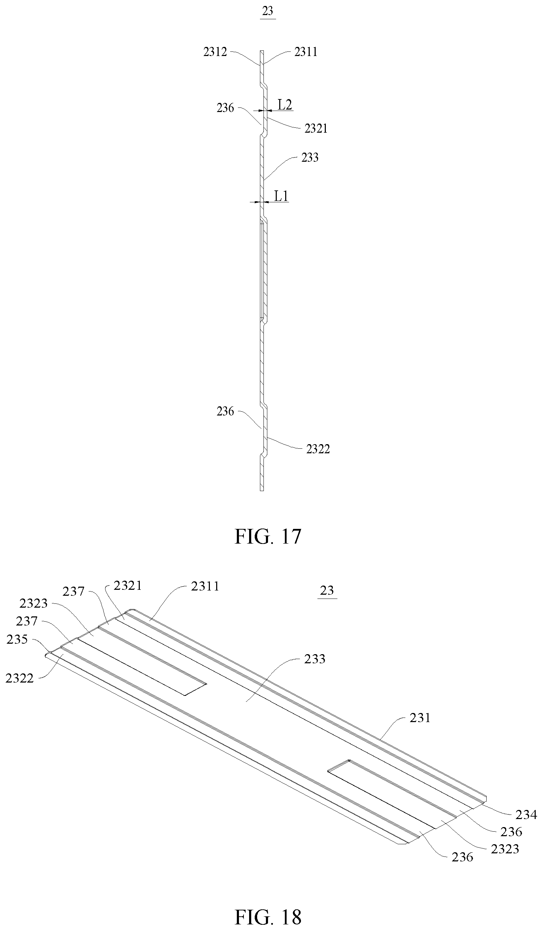

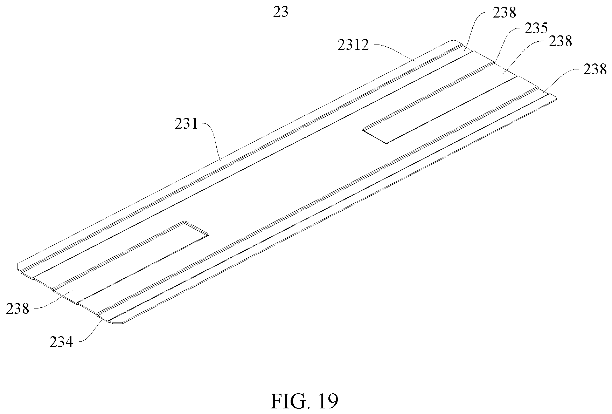

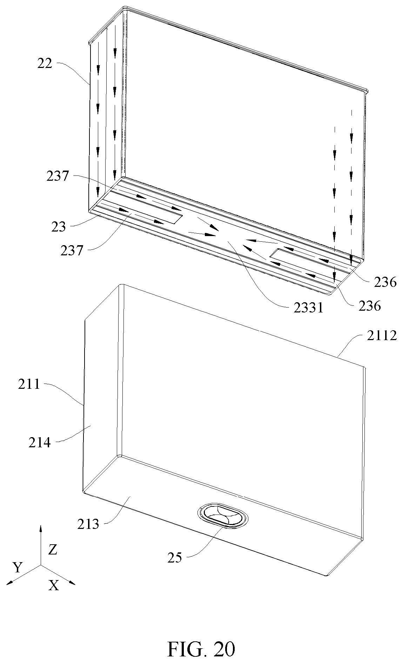

In some examples, with reference to FIG. 15 to FIG. 20, FIG. 15 is a schematic structural exploded view of a battery cell 20 according to some other embodiments of this application; FIG. 16 is a front view of an isolation member 23 in a battery cell 20 according to some other embodiments of this application; FIG. 17 is a cross-sectional view along B-B in FIG. 16; FIG. 18 and FIG. 19 are respectively isometric views of FIG. 16; FIG. 19 is a rear view of FIG. 18; and FIG. 20 is a schematic diagram of a flow direction of airflow in a battery cell 20 according to some other embodiments of this application. The plurality of protrusion portions 232 further include a plurality of third protrusion portions 2323 located between the first protrusion portion 2321 and the second protrusion portion 2322, where some of the third protrusion portions 2323, together with the first protrusion portion 2321 and the second protrusion portion 2322, enclose a plurality of channel inlets at the position of the first edge 234, and the remaining third protrusion portions 2323, together with the first protrusion portion 2321 and the second protrusion portion 2322, enclose a plurality of channel inlets at the position of the second edge 235.

A spacing space is formed between the first protrusion portion 2321 and the second protrusion portion 2322, and the third protrusion portions 2323 are between the first protrusion portion 2321 and the second protrusion portion 2322. It can be learned that the third protrusion portions 2323 are located in the spacing space, so that the third protrusion portions 2323 divide the spacing space, and thus the original overall exhaust channel 233 is divided into a plurality of exhaust sub-channels.

Since one third protrusion portion 2323 extends from the first edge 234 toward the second edge 235, it can be learned that the third protrusion portion 2323 enables the exhaust channel 233 to be provided with two openings at the first edge 234, and the openings may be construed as the inlets of the exhaust channel 233. To be specific, by the provision of the third protrusion portion 2323, the exhaust channel 233 is provided with at least two channel inlets at the first edge 234, and when there are a plurality of third protrusion portions 2323, the exhaust channel 233 may be provided with a plurality of channel inlets at the first edge 234 to shunt the fluid. Similarly, another third protrusion portion 2323 extends from the second edge 235 toward the first edge 234. Therefore, it can be learned that the third protrusion portion 2323 enables the exhaust channel 233 to be provided with two openings at the second edge 235, and the openings may also be construed as the inlets of the exhaust channel 233. To be specific, with reference to FIG. 18 and FIG. 20, by the provision of the another third protrusion portion 2323, the exhaust channel 233 is provided with at least two channel inlets at the second edge 235, and the two channel inlets are both in communication with the gap 26; and when there are a plurality of third protrusion portions 2323, the exhaust channel 233 may be provided with a plurality of channel inlets at the second edge 235 to shunt the fluid.

When the third protrusion portion 2323 divides the spacing space between the first protrusion portion 2321 and the second protrusion portion 2322 into two exhaust sub-channels, a communication hole may be provided on the third protrusion portion 2323 to enable the two exhaust sub-channels to be in communication with each other, so that the fluids in the two exhaust sub-channels can both flow toward the position where the pressure relief mechanism 25 is located.

In these examples, by the provision of the plurality of third protrusion portions 2323, the exhaust channel 233 is provided with at least two channel inlets at the first edge 234 as well as at least two channel inlets at the second edge 235, to achieve the purpose of shunting the airflow, and by the formation of the plurality of channel inlets, the airflow can enter the exhaust channel 233 from a plurality of directions, improving the airflow aggregation and guiding ability, thereby helping to improve the circulation of the airflow and improve the heat conduction and heat dissipation ability of the isolation member 23.

In some examples, with reference to FIG. 16, FIG. 18, and FIG. 19, along the first direction X, the plurality of third protrusion portions 2323 are spaced apart, and the pressure relief mechanism 25 faces the spacing regions between the plurality of third protrusion portions 2323.

For example, there is a midpoint position between the first edge 234 and the second edge 235. When an extension length of the third protrusion portion 2323 located at the position of the first edge 234 from the first edge 234 is less than half of a length between the first edge 234 and the second edge 235, an extension end of the third protrusion portion 2323 forms a spacing segment with the midpoint position. Similarly, when an extension length of the third protrusion portion 2323 located at the position of the second edge 235 from the second edge 235 is less than half of the length between the first edge 234 and the second edge 235, an extension end of the third protrusion portion 2323 forms a spacing segment with the midpoint position. Therefore, it can be learned that the two third protrusion portions 2323 form a spacing region at the midpoint position. The spacing region may be used to aggregate the airflow flowing from the positions of the first edge 234 and the second edge 235, so that the airflow aggregates in the spacing region to form a fluid aggregation region 2331. Thus, the pressure relief mechanism 25 may be provided at a position of the first wall 213 facing the spacing region (or the fluid aggregation region 2331), to achieve a better pressure relief effect and prevent the third protrusion portion 2323 from blocking the pressure relief mechanism 25.

In these examples, by controlling the extension length of the third protrusion portion 2323, a spacing region is formed between the extension ends of the third protrusion portion 2323 extending from the first edge 234 and the third protrusion portion 2323 extending from the second edge 235. The spacing region may be used to aggregate the airflow flowing from both the first edge 234 and the second edge 235, to achieve aggregation of the airflow, so as to guide and converge the flow. This provides a basis for subsequently setting the position of the pressure relief mechanism 25, thereby helping to enhance the pressure relief effect.

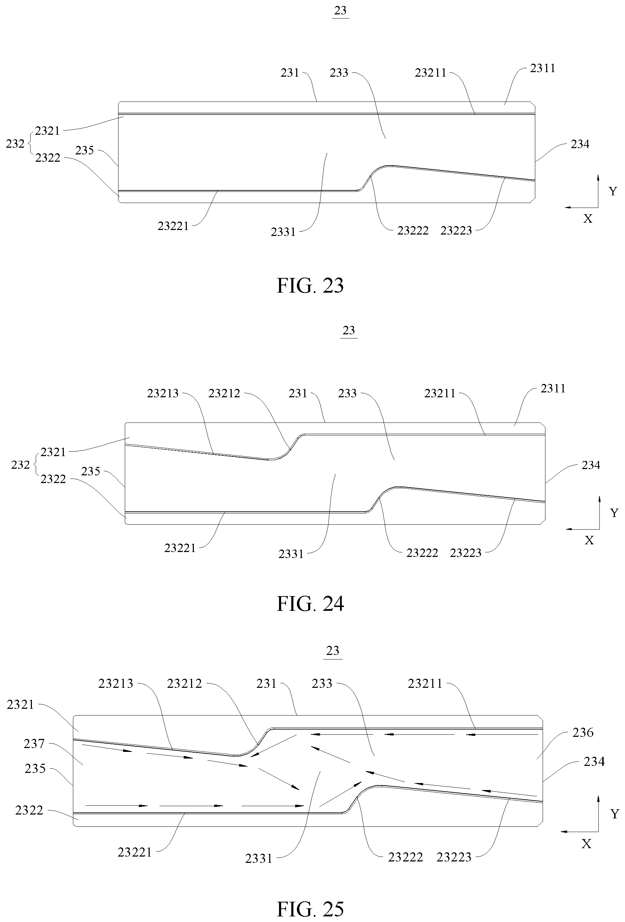

In some examples, with reference to FIG. 8, FIG. 19, and the following FIG. 24, the support plate 231 has a second surface 2312 facing away from the first surface 2311, where the second surface 2312 is provided with a recess 238.

The support plate 231 is disposed between the cell assembly 22 and the first wall 213, where the first surface 2311 faces the first wall 213, so that the second surface 2312 faces the cell assembly 22. The recess 238 is formed on the second surface 2312 of the support plate 231, that is, the recess 238 faces the cell assembly 22.

The recess 238 may be a groove structure formed on the second surface 2312 of the support plate 231, and the recess 238 may be arranged on the second surface 2312 along any direction. A plurality of recesses 238 may be provided, and the plurality of recesses 238 may be parallel to each other or intersect with each other. The recess 238 may be used to reduce the weight of the support plate 231 to achieve a light weight of the support plate 231. The recess 238 on the second surface 2312 may run through from the first edge 234 to the second edge 235 to form a through groove structure.

In these examples, the recess 238 forms a groove structure on the second surface 2312, to reduce the overall weight of the support plate 231 by removing a material from the second surface 2312, helping to achieve a light weight of the support plate 231.

In some examples, with reference to FIG. 8, FIG. 19, and the following FIG. 24, the recess 238 and the protrusion portion 232 are disposed in one-to-one correspondence in the thickness direction of the support plate 231. For example, the number of the recesses 238 is the same as the number of the protrusion portions 232, and one recess 238 faces away from one protrusion portion 232.

When the support plate 231 and the protrusion portion 232 are stamped structural members that are integrally stamped, the recess 238 may be a stamped groove formed on a back side during stamping of the protrusion portion 232. Therefore, it can be learned that the number of the stamped grooves is the same as the number of the protrusion portions 232, and one stamping groove faces away from one protrusion portion 232. This achieves integral stamping formation of the support plate 231 and the protrusion portion 232.

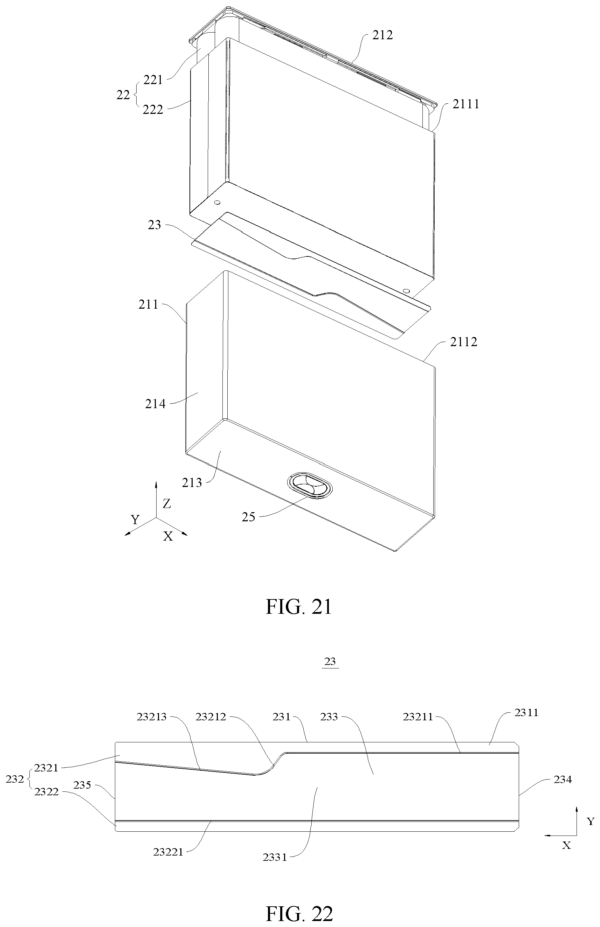

In some examples, with reference to FIG. 3, FIG. 4, FIG. 15, and the following FIG. 21, the housing 21 includes a shell 211 and an end cover 212, where the shell 211 is provided with an accommodating opening 2112, the end cover 212 is connected to the shell 211 and covers the accommodating opening 2112, and the first wall 213 is a wall of the shell 211 or the end cover 212. Therefore, it can be learned that the pressure relief mechanism 25 may be connected to the shell 211 or to the end cover 212.

The end cover 212 refers to a component that covers an opening of the shell 211 to isolate the internal environment of the battery cell 20 from the external environment. The end cover 212 is adapted to the shell 211 in shape so as to fit with the shell 211. Without limitation, the end cover 212 may be made of a material with certain hardness and strength (such as aluminum alloy), so that the end cover 212 is not prone to deformation when squeezed or collided, enabling the battery cell 20 to have higher structural strength. Functional components such as a cell terminal may be provided on the end cover 212. The cell terminal may be configured to be electrically connected to the cell assembly 22 for outputting or inputting electrical energy of the battery cell 20.

The shell 211 is a component configured to fit with the end cover 212 to form the internal environment of the battery cell 20, where the formed internal environment may be used to accommodate the cell assembly 22, an electrolyte, and other components. The shell 211 and the end cover 212 may be independent components, where the shell 211 may be provided with the accommodating opening 2112, and the end cover 212 covers the accommodating opening 2112 to form the internal environment of the battery cell 20.

Without limitation, the end cover 212 and the shell 211 may be integrated. Specifically, the end cover 212 and the shell 211 can may first form a common connection surface before other components are put into the shell, and when it is necessary to seal the interior of the housing 21, the end cover 212 covers the shell 211.

The shell 211 may be of various shapes and various sizes, such as a cuboidal shape, a cylindrical shape, and a hexagonal prism shape. Specifically, the shape of the shell 211 may be determined based on a specific shape and size of the cell assembly 22. The shell 211 may be made of various materials, such as copper, iron, aluminum, stainless steel, aluminum alloy, and plastic. This is not particularly limited in the embodiments of this application.

With reference to FIG. 3, the cell assembly 22 enters the inner cavity 2111 through the accommodating opening 2112, the cell assembly 22 is accommodated in the inner cavity 2111 of the shell 211, and the end cover 212 covers the accommodating opening 2112 to seal the inner cavity 2111, so as to ensure the airtightness of the inner cavity 2111. The first wall 213 and the accommodating opening 2112 are respectively disposed at two opposite ends of the shell 211.

The accommodating opening 2112 may be provided at a bottom, top, or side portion of the shell 211. Correspondingly, the end cover 212 may be disposed at the bottom, top, or side portion of the shell 211. For example, with reference to FIG. 4, the first wall 213 is a bottom wall of the shell 211, and the pressure relief mechanism 25 is disposed on the bottom wall. Thus, the accommodating opening 2112 is provided at the top of the shell 211, and the end cover 212 is connected to the top of the shell 211 to cover the accommodating opening 2112.

In these examples, the end cover 212 may be detachably connected to the shell 211. The end cover 212 is configured to seal the inner cavity 2111 of the shell 211, so that the inner cavity 2111 forms a sealed space, where the cell assembly 22 is accommodated in the sealed space, and gas produced by the cell assembly 22 can flow to the position where the pressure relief mechanism 25 is located through the exhaust channel 233, achieving directional movement of the fluid. Both the end cover 212 and the shell 211 can protect the cell assembly 22.

In a specific embodiment, the battery cell 20 includes a housing 21, a cell assembly 22, and an isolation member 23. The housing 21 has an inner cavity 2111, and the housing 21 includes a first wall 213. The cell assembly 22 is disposed in the inner cavity 2111. The isolation member 23 is disposed between the first wall 213 and the cell assembly 22, and the isolation member 23 abuts against both the first wall 213 and the cell assembly 22. The isolation member 23 includes at least an isolation member made of a metal material, where the metal material includes at least one of aluminum, magnesium, zinc, titanium, nickel, copper, and alloy, or a combination of several of them. An oxide layer is formed on a surface of the isolation member. The battery cell 20 further includes a pressure relief mechanism 25 disposed on the first wall 213. The isolation member 23 is provided with an exhaust channel 233, where the exhaust channel 233 is in communication with the pressure relief mechanism 25. The exhaust channel 233 is connected to an edge of the isolation member 23 in a first direction X, where the first direction X intersects with a thickness direction of the first wall 213. The housing 21 further has a second wall 214 connected to the first wall 213, a gap 26 is formed between the second wall 214 and an outer circumferential surface of the cell assembly 22, and the gap 26 is in communication with the exhaust channel 233. The isolation member 23 includes a support plate 231 and a plurality of protrusion portions 232, where the support plate 231 has a first surface 2311, and the plurality of protrusion portions 232 are connected to the first surface 2311 and enclose the exhaust channel 233. The protrusion portions 232 are integrally formed with the support plate 231. The first surface 2311 faces the first wall 213. The support plate 231 has a first edge 234 and a second edge 235 facing away from each other along the first direction X. The plurality of protrusion portions 232 include at least a first protrusion portion 2321 and a second protrusion portion 2322, where the first protrusion portion 2321 and the second protrusion portion 2322 both extend from the first edge 234 to the second edge 235 along the first direction X, the first protrusion portion 2321 and the second protrusion portion 2322 are spaced apart in a third direction Y to form the exhaust channel 233, the third direction Y is perpendicular to the first direction X, and the first direction X is a direction perpendicular to the thickness direction of the support plate 231. The plurality of protrusion portions 232 further include a plurality of third protrusion portions 2323 located between the first protrusion portion 2321 and the second protrusion portion 2322, where the plurality of third protrusion portions 2323, together with the first protrusion portion 2321 and the second protrusion portion 2322, enclose a plurality of channel inlets at positions of the first edge 234 and the second edge 235 respectively.

On the basis of the above battery cell 20, this application further proposes an example of a battery 100. The battery 100 includes the battery cell 20 as described in any of the above examples.

The battery 100 in this example may include a box 10, where the battery cell 20 is installed in the box 10. The battery 100 may include one battery cell 20 as described above, and the battery 100 may further include a plurality of battery cells 20. When the above battery cell 20 is provided in plurality in the battery 100, the plurality of battery cells 20 may be arranged according to a preset rule. The plurality of battery cells 20 may be arranged in one row and a plurality of columns, or in a plurality of rows and a plurality of columns. The plurality of battery cells 20 may be connected in series, in parallel, or in series-parallel.

It can be understood that in this example, only the battery 100 including the above battery cell 20 is described, and the battery 100 may further include other functional components. Details are not described herein again.

The example of the battery 100 in this application is based on the examples of the above battery cell 20, and the example of the battery 100 includes all technical effects of the examples of the above battery cell 20. Details are not described herein again.

In some examples, an example of an electric apparatus is disclosed. The electric apparatus includes the battery cell 20 as described in any of the above examples, or the battery 100 as described in any of the above examples.

The electric apparatus in this example includes but is not limited to: mobile phones, portable devices, notebook computers, battery cars, electric vehicles 1000, ships, spacecraft, electric toys, and electric tools. The battery cell 20 as described in any of the above examples may be independently installed in the electric apparatus, and the above battery 100 may also be installed in the electric apparatus.

The example of the electric apparatus in this application is based on the examples of the above battery cell 20 or battery 100, and the example of the electric apparatus includes all technical effects of the examples of the above battery cell 20 or battery 100. Details are not described herein again.

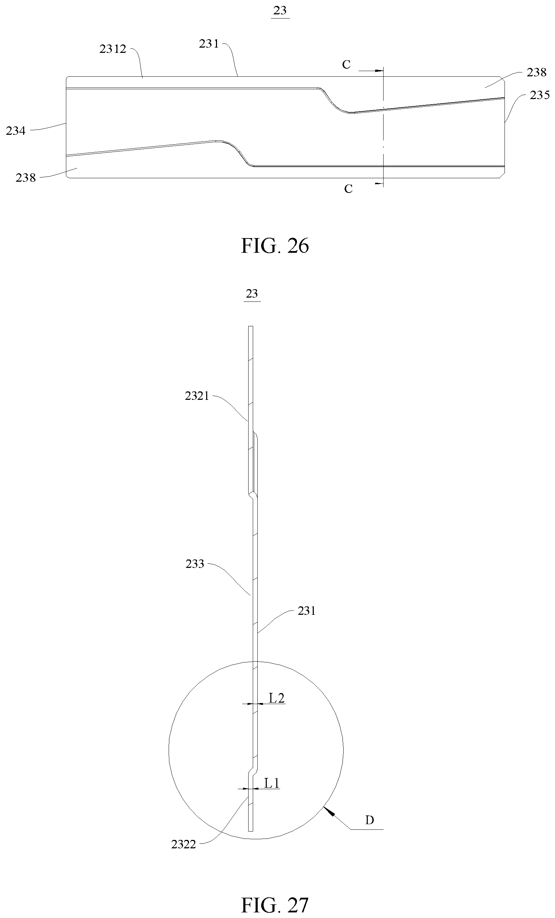

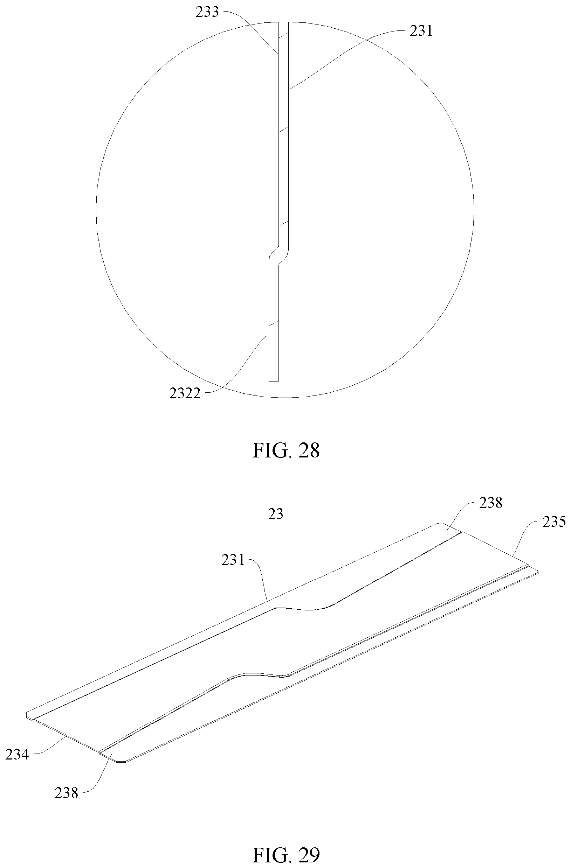

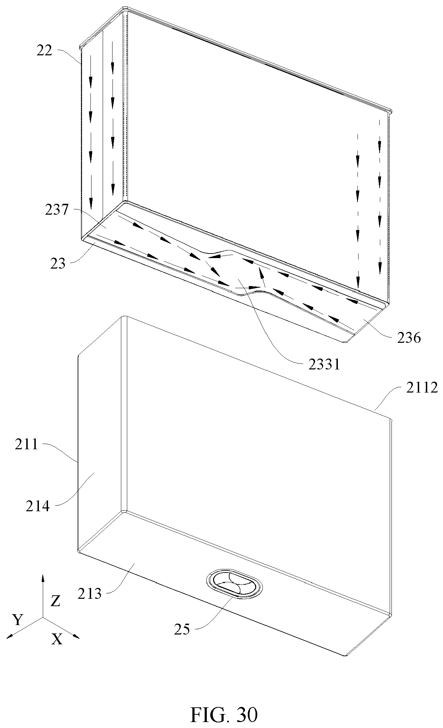

With reference to FIG. 21 to FIG. 30, FIG. 21 is a first schematic structural exploded view of a battery cell 20 according to still some other embodiments of this application; FIG. 22 is a second schematic structural exploded view of a battery cell 20 according to yet some other embodiments of this application; FIG. 23 is a third schematic structural exploded view of a battery cell 20 according to further some other embodiments of this application; FIG. 24 is a front view of an isolation member 23 in a battery cell 20 according to still further some other embodiments of this application; FIG. 25 is a schematic diagram of a flow direction of airflow on an isolation member 23 in a battery cell 20 according to yet further some other embodiments of this application; FIG. 26 is a rear view of FIG. 24; FIG. 27 is a cross-sectional view along C-C in FIG. 26; FIG. 28 is a partial enlarged view of position D in FIG. 27; FIG. 29 is an isometric view of FIG. 26; and FIG. 30 is a schematic diagram of a flow direction of airflow in a battery cell 20 according to some other embodiments of this application. In these examples, with reference to FIG. 22, the first protrusion portion 2321 has a first side edge 23211 facing the exhaust channel 233, where part of the first side edge 23211 protrudes outward toward the second protrusion portion 2322 to form a first blocking wall 23212, and a surface of the first blocking wall 23212 faces the first edge 234.

The first protrusion portion 2321 and the second protrusion portion 2322 both extend from the first edge 234 to the second edge 235 along the first direction X, and the exhaust channel 233 is formed between the first protrusion portion 2321 and the second protrusion portion 2322. Therefore, the first protrusion portion 2321 has a first side edge 23211 facing the exhaust channel 233. It can be understood that the first side edge 23211 extends from the first edge 234 to the second edge 235.

The first blocking wall 23212 is formed on the first side edge 23211, and the first blocking wall 23212 may be located at any position of the first side edge 23211 between the first edge 234 and the second edge 235. For example, the first blocking wall 23212 may be located at a middle position of the first side edge 23211 between the first edge 234 and the second edge 235.

Also with reference to FIG. 25, the surface of the first blocking wall 23212 faces the interior of the exhaust channel 233, and the surface of the first blocking wall 23212 faces the first edge 234. The first edge 234 is provided with a first channel inlet 236. Therefore, it can be learned that the gas discharged from the cell assembly 22 enters the exhaust channel 233 through the first channel inlet 236 and flows toward the first blocking wall 23212. When the gas flows to the first blocking wall 23212, the first blocking wall 23212 can block part of the gas, so that the gas can aggregate at the position of the first blocking wall 23212 to form a fluid aggregation region 2331. The pressure relief mechanism 25 is installed on the first wall 213 of the housing 21 and is disposed close to the first blocking wall 23212, so that the fluid aggregation region 2331 faces the pressure relief mechanism 25.

The surface of the first blocking wall 23212 is inclined toward the first edge 234 and forms a first preset included angle with the first direction X, where the first preset included angle ranges from 0° to 90°. For example, the first preset included angle is 30°, 45°, 60°, 90°, or the like.

In these examples, the first blocking wall 23212 is formed on the first side edge 23211 of the first protrusion portion 2321, and the first blocking wall 23212 is configured to block the gas entering the exhaust channel 233, so that the gas can aggregate on a front side of the first blocking wall 23212 to form a fluid aggregation region 2331 at the position of the first blocking wall 23212. After aggregation, the gas can be concentratively discharged through the pressure relief mechanism 25, improving the directional pressure relief capability of the battery cell 20 and helping to improve the use performance of the pressure relief mechanism 25.

In some examples, with reference to FIG. 23 and FIG. 24, the second protrusion portion 2322 has a second side edge 23221 facing the exhaust channel 233, where part of the second side edge 23221 protrudes outward toward a first protrusion to form a second blocking wall 23222, and a surface of the second blocking wall 23222 faces the second edge 235.

The first protrusion portion 2321 and the second protrusion portion 2322 both extend from the first edge 234 to the second edge 235 along the first direction X, and the exhaust channel 233 is formed between the first protrusion portion 2321 and the second protrusion portion 2322. Therefore, the second protrusion portion 2322 has a second side edge 23221 facing the exhaust channel 233. It can be understood that the second side edge 23221 extends from the first edge 234 to the second edge 235.

The second blocking wall 23222 is formed on the second side edge 23221, and the second blocking wall 23222 may be located at any position of the second side edge 23221 between the first edge 234 and the second edge 235. For example, the second blocking wall 23222 may be located at a middle position of the second side edge 23221 between the first edge 234 and the second edge 235.

Also with reference to FIG. 25, the surface of the second blocking wall 23222 faces the interior of the exhaust channel 233, and the surface of the second blocking wall 23222 faces the second edge 235. The second channel inlet 237 is formed on the second edge 235. Therefore, it can be learned that the gas discharged from the cell assembly 22 enters the exhaust channel 233 through the second channel inlet 237 and flows toward the second blocking wall 23222. When the gas flows to the second blocking wall 23222, the second blocking wall 23222 can block part of the gas, so that the gas can aggregate at the position of the second blocking wall 23222 to form a fluid aggregation region 2331. The pressure relief mechanism 25 is installed on the first wall 213 of the housing 21 and is disposed close to the second blocking wall 23222, so that the fluid aggregation region 2331 faces the pressure relief mechanism 25.

The surface of the second blocking wall 23222 is inclined toward the second edge 235 and forms a second preset included angle with the first direction X, where the second preset included angle ranges from 0° to 90°. For example, the first preset included angle is 30°, 45°, 60°, 90°, or the like.

In these examples, the second blocking wall 23222 is formed on the second side edge 23221 of the second protrusion portion, and the second blocking wall 23222 is configured to block the gas entering the exhaust channel 233, so that the gas can aggregate at the position of the second blocking wall 23222 to form a fluid aggregation region 2331 at the position of the second blocking wall 23222. After aggregation, the gas can be concentratively discharged through the pressure relief mechanism 25, improving the directional pressure relief capability of the battery cell 20 and helping to improve the use performance of the pressure relief mechanism 25.

In some examples, with reference to FIG. 21, FIG. 24, and FIG. 25, the surface of the first blocking wall 23212 faces the surface of the second blocking wall 23222; the first blocking wall 23212 and the second blocking wall 23222 are spaced apart; and the pressure relief mechanism 25 faces a spacing region between the first blocking wall 23212 and the second blocking wall 23222.

The first blocking wall 23212 is located on the first side edge 23211 and disposed close to the second edge 235, and the surface of the first blocking wall 23212 faces the first edge 234. The second blocking wall 23222 is located on the second side edge 23221 and disposed close to the first edge 234, and the surface of the second blocking wall 23222 faces the second edge 235. Therefore, it can be understood that a spacing region or spacing space can be formed between the first blocking wall 23212 and the second blocking wall 23222, and the spacing region or spacing space is the formed fluid aggregation region 2331.

The surface of the first blocking wall 23212 faces the first edge 234, the surface of the second blocking wall 23222 faces the second edge 235, and the first edge 234 and the second edge 235 are respectively located at two ends of the exhaust channel 233 in the first direction X. Therefore, it can be learned that the first blocking wall 23212 and the second blocking wall 23222 face each other, or it can be understood that the surface of the first blocking wall 23212 faces the surface of the second blocking wall 23222. The case where the surface of the first blocking wall 23212 faces the surface of the second blocking wall 23222 includes that the surface of the first blocking wall 23212 and the surface of the second blocking wall 23222 are spaced apart and parallel to each other, or the surface of the first blocking wall 23212 and the surface of the second blocking wall 23222 may have an inclined included angle of 0° to 45°. For example, the inclined included angle is 5°, 10°, 15°, 20°, 25°, 30°, 35°, 40°, 45°, or the like.

The surface of the first blocking wall 23212 faces the surface of the second blocking wall 23222, the first blocking wall 23212 can block at least part of the gas entering the exhaust channel 233 through the first channel inlet 236 on the first edge 234, and the second blocking wall 23222 can block at least part of the gas entering the exhaust channel 233 through the second channel inlet 237 on the second edge 235. Therefore, the gas accumulates between the first blocking wall 23212 and the second blocking wall 23222 to form the fluid aggregation region 2331. When the fluid aggregation region 2331 faces the pressure relief mechanism 25, the pressure relief mechanism 25 can be opened in time for pressure relief, helping to improve the use performance of the pressure relief mechanism 25.

In some examples, with reference to FIG. 24 and FIG. 25, the second side edge 23221 is provided with a second guiding section 23223 inclined from the first edge 234 toward the first side edge 23211 along the first direction X, where the second guiding section 23223 is connected to the second blocking wall 23222, with a flow guide direction being toward the surface of the first blocking wall 23212.

The second guiding section 23223 may be a partial surface region of the second side edge 23221. Therefore, it can be learned that the second guiding section 23223 is located between the first edge 234 and the second blocking wall 23222, and the second guiding section 23223 is inclined toward the first side edge 23211 in a direction from the first edge 234 toward the second edge 235. Therefore, in a direction from the first channel inlet 236 toward the interior of the exhaust channel 233, the exhaust channel 233 is gradually reduced in size, an extension end of the second guiding section 23223 faces the first blocking wall 23212, and the flow guide direction of the second guiding section 23223 is a flow direction of the gas along the second guiding section 23223. To be specific, the gas flowing along the second guiding section 23223 flows toward the surface of the first blocking wall 23212 under the guiding action of the second guiding section 23223.

An inclination angle of the second guiding section 23223 toward the first side edge 23211 ranges from, but is not limited to, 0° to 30°, for example, 5°, 10°, 15°, 20°, 25°, 30°, or the like, which may be adaptively designed based on a position of the first blocking wall 23212 and a length, width, and the like of the exhaust channel 233.

In these examples, by the provision of the second guiding section 23223, the gas entering the exhaust channel 233 through the first channel inlet 236 can flow toward the first blocking wall 23212 under the guiding action of the second guiding section 23223, improving the directivity of the gas flowing toward the first blocking wall 23212. Through the blocking action of the first blocking wall 23212, the gas can aggregate at the position of the first blocking wall 23212, enhancing the gas blocking effect of the first blocking wall 23212.

In some examples, with reference to FIG. 24 and FIG. 25, the first side edge 23211 is provided with a first guiding section 23213 inclined from the second edge 235 toward the second side edge 23221 along the first direction X, where the first guiding section 23213 is connected to the first blocking wall 23212, with a flow guide direction being toward the surface of the second blocking wall 23222.

The first guiding section 23213 may be a partial surface region of the first side edge 23211. Therefore, it can be learned that the first guiding section 23213 is located between the second edge 235 and the first blocking wall 23212, and the first guiding section 23213 is inclined toward the second side edge 23221 in a direction from the second edge 235 toward the first edge 234. Therefore, in a direction from the second channel inlet 237 toward the interior of the exhaust channel 233, the exhaust channel 233 is gradually reduced in size, an extension end of the first guiding section 23213 faces the second blocking wall 23222, and the flow guide direction of the first guiding section 23213 is a flow direction of the gas along the first guiding section 23213. To be specific, the gas flowing along the first guiding section 23213 flows toward the surface of the second blocking wall 23222 under the guiding action of the first guiding section 23213.

An inclination angle of the first guiding section 23213 toward the second side edge 23221 ranges from, but is not limited to, 0° to 30°, for example, 5°, 10°, 15°, 20°, 25°, 30°, or the like, which may be adaptively designed according to a position of the second blocking wall 23222 and a length, width, and the like of the exhaust channel 233.

In these examples, by the provision of the first guiding section 23213, the gas entering the exhaust channel 233 through the second channel inlet 237 can flow toward the second blocking wall 23222 under the guiding action of the first guiding section 23213, improving the directivity of the gas flowing toward the second blocking wall 23222. Through the blocking action of the second blocking wall 23222, the gas can aggregate at the position of the second blocking wall 23222, enhancing the gas blocking effect of the second blocking wall 23222.

In a specific implementation, with reference to FIG. 21 to FIG. 30, the first protrusion portion 2321 has a first side edge 23211 facing the exhaust channel 233, part of a first side plate protrudes outward toward a second protrusion to form a first blocking wall 23212, and a surface of the first blocking wall 23212 faces the first edge 234; the second protrusion portion 2322 has a second side edge 23221 facing the exhaust channel 233, part of the second side edge 23221 protrudes outward toward the first protrusion to form a second blocking wall 23222, and a surface of the second blocking wall 23222 faces the second edge 235; the surface of the first blocking wall 23212 faces the surface of the second blocking wall 23222, and the first blocking wall 23212 and the second blocking wall 23222 are spaced apart; the pressure relief mechanism 25 faces a spacing region between the first blocking wall 23212 and the second blocking wall 23222; the second side edge 23221 is provided with a second guiding section 23223 inclined from the first edge 234 toward the first side edge 23211 along the first direction X, where the second guiding section 23223 is connected to the second blocking wall 23222, with a flow guide direction being toward the surface of the first blocking wall 23212; and the first side edge 23211 is provided with a first guiding section 23213 inclined from the second edge 235 toward the second side edge 23221 along the first direction X, where the first guiding section 23213 is connected to the first blocking wall 23212, with a flow guide direction being toward the surface of the second blocking wall 23222.

The above descriptions are only preferred embodiments of this application, and only the technical principles of this application are specifically described. These descriptions are only intended to explain the principles of this application and cannot be interpreted as limiting the protection scope of this application in any manner. Based on the explanation here, any modifications, equivalent replacements, and improvements made within the spirit and principles of this application, and other specific implementations of this application that can be conceived by those skilled in the art without creative efforts, should all be included in the protection scope of this application.

## Claims

1. A battery cell, **characterized by** comprising:
a housing, having an inner cavity, wherein the housing comprises a first wall;
a cell assembly, disposed in the inner cavity; and
an isolation member, disposed between the first wall and the cell assembly, wherein the isolation member abuts against both the first wall and the cell assembly, and the isolation member comprises a metal layer.

2. The battery cell according to claim 1, **characterized in that** the metal layer comprises one of aluminum, magnesium, zinc, titanium, nickel, copper, and alloys thereof.

3. The battery cell according to claim 2, **characterized in that** the isolation member has two side surfaces, wherein the two side surfaces correspondingly face the first wall and the cell assembly respectively, and at least one of the two side surfaces is provided with an oxide layer.

4. The battery cell according to any one of claims 1 to 3, **characterized in that** the battery cell further comprises an insulating film wrapping the outside of the cell assembly, wherein the isolation member abuts against the insulating film, and the isolation member is disposed on a side of the insulating film away from the cell assembly.

5. The battery cell according to claim 4, wherein the insulating film wraps the cell assembly in a folded manner and forms a first folded edge and a second folded edge overlapping with each other at a side edge of the cell assembly, wherein a portion of the insulating film located between the cell assembly and the isolation member is provided with a positioning hole; the battery cell further comprises an adhesive tape, the adhesive tape comprises a first portion and a second portion connected to each other; the first portion is disposed between the isolation member and the insulating film and covers the positioning hole; and the second portion fixes the first folded edge and the second folded edge.

6. The battery cell according to any one of claims 1 to 3, **characterized in that** the battery cell further comprises a pressure relief mechanism disposed on the first wall, the isolation member is provided with an exhaust channel, and the exhaust channel is in communication with the pressure relief mechanism.

7. The battery cell according to claim 6, **characterized in that** the exhaust channel is connected to an edge of the isolation member in a first direction, wherein the first direction intersects with a thickness direction of the first wall.

8. The battery cell according to claim 7, **characterized in that** the housing further comprises a second wall, wherein the second wall is connected to the first wall, a gap is formed between the second wall and an outer circumferential surface of the cell assembly, and the gap is in communication with the exhaust channel.

9. The battery cell according to any one of claims 6 to 8, **characterized in that** the isolation member comprises a support plate and a plurality of protrusion portions, wherein the support plate has a first surface, and the plurality of protrusion portions are connected to the first surface and enclose the exhaust channel.

10. The battery cell according to claim 9, **characterized in that** the protrusion portions are integrally formed with the support plate.

11. The battery cell according to claim 9, **characterized in that** the first surface faces the first wall.

12. The battery cell according to any one of claims 9 to 11, **characterized in that** the support plate has a first edge and a second edge disposed along a first direction; and the plurality of protrusion portions comprise at least a first protrusion portion and a second protrusion portion, wherein the first protrusion portion and the second protrusion portion both extend along the first direction and are located between the first edge and the second edge, and the first protrusion portion and the second protrusion portion are spaced apart in a third direction to form the exhaust channel; wherein a thickness direction of the support plate, the first direction, and the third direction intersect with each other.

13. The battery cell according to claim 12, **characterized in that** the plurality of protrusion portions further comprise a plurality of third protrusion portions located between the first protrusion portion and the second protrusion portion; wherein some of the third protrusion portions, together with the first protrusion portion and the second protrusion portion, enclose a plurality of channel inlets at a position of the first edge; and the remaining third protrusion portions, together with the first protrusion portion and the second protrusion portion, enclose a plurality of channel inlets at a position of the second edge.

14. The battery cell according to claim 13, **characterized in that** along the first direction, the plurality of third protrusion portions are spaced apart, wherein the pressure relief mechanism faces spacing regions between the plurality of third protrusion portions.

15. The battery cell according to claim 12, **characterized in that** the first protrusion portion has a first side edge facing the exhaust channel, wherein part of the first side edge protrudes outward toward the second protrusion portion to form a first blocking wall, and a surface of the first blocking wall faces the first edge.

16. The battery cell according to claim 15, **characterized in that** the second protrusion portion has a second side edge facing the exhaust channel, wherein part of the second side edge protrudes outward toward the first protrusion portion to form a second blocking wall, and a surface of the second blocking wall faces the second edge.

17. The battery cell according to claim 16, **characterized in that** the surface of the first blocking wall faces the surface of the second blocking wall, and the first blocking wall and the second blocking wall are spaced apart, wherein the pressure relief mechanism faces a spacing region between the first blocking wall and the second blocking wall.

18. The battery cell according to claim 16 or 17, **characterized in that** the second side edge is inclined from the first edge toward the first side edge along the first direction to form a second guiding section, wherein the second guiding section is connected to the second blocking wall, with a flow guide direction being toward the first blocking wall.

19. The battery cell according to claim 18, **characterized in that** the first side edge is inclined from the second edge toward the second side edge along the first direction to form a first guiding section, wherein the first guiding section is connected to the first blocking wall, with a flow guide direction being toward the second blocking wall.

20. The battery cell according to any one of claims 9 to 19, **characterized in that** an outward protruding height of the protrusion portion is 0.4 mm to 0.8 mm; and/or
a thickness of the support plate is 0.4 mm to 0.8 mm.

21. The battery cell according to any one of claims 9 to 19, **characterized in that** the support plate has a second surface facing away from the first surface, and the second surface is provided with a recess, wherein the recess and the protrusion portion are disposed in one-to-one correspondence in a thickness direction of the support plate.

22. The battery cell according to claim 12, **characterized in that** the first protrusion portion and the second protrusion portion are respectively formed by bending two edges of the support plate that are perpendicular to the first direction.

23. The battery cell according to any one of claims 1 to 22, **characterized in that** the housing comprises a shell and an end cover, wherein the shell is provided with an accommodating opening, the end cover is connected to the shell and covers the accommodating opening, and the first wall is a wall of the shell or is the end cover.

24. A battery, **characterized by** comprising the battery cell according to any one of claims 1 to 23.

25. An electric apparatus, **characterized by** comprising the battery cell according to any one of claims 1 to 23, or comprising the battery according to claim 24.
